# EUROPÄISCHE PATENTSCHRIFT

(11) **EP 3 658 638 B1**
(45) Veröffentlichungstag und Bekanntmachung des Hinweises auf die Patenterteilung: **08.09.2021**
(21) Anmeldenummer: 18745564.7
(22) Anmeldetag: 20.07.2018
(51) Int. Cl.: C09D 175/04, C08G 18/08, C08G 18/28, C08G 18/40, C08G 18/64, C08G 18/80, C09D 5/08, B05D 1/18, C08G 18/58, B05D 7/14, C09D 7/65, C09D 7/40

(54) **ZUR TAUCHBESCHICHTUNG GEEIGNETE, BEI NIEDRIGER TEMPERATUR HÄRTENDE BESCHICHTUNGSMITTELZUSAMMENSETZUNGEN**
COATING COMPOSITIONS WHICH CURE AT LOW TEMPERATURES SUITABLE FOR DIP-COATING
COMPOSITIONS D'AGENTS DE REVÊTEMENT APPROPRIÉES AU REVÊTEMENT PAR TREMPAGE, DURCISSANT À BASSE TEMPÉRATURE

(30) Priorität: 26.07.2017 EP 17183267; 04.08.2017 EP 17184875; 29.03.2018 EP 18165185
(43) Veröffentlichungstag der Anmeldung: 03.06.2020
(73) Patentinhaber: Chemetall GmbH, 60487 Frankfurt (DE)
(72) Erfinder: FRENKEL, Aliaksandr, 60487 Frankfurt am Main (DE); EILINGHOFF, Ron, 60487 Frankfurt am Main (DE); DROLL, Martin, 33098 Paderborn (DE)
(86) Internationale Anmeldenummer: PCT/EP2018/069840
(87) Internationale Veröffentlichungsnummer: WO 2019/020534

(56) Entgegenhaltungen:
- DE-A1-102008 043 682
- DE-A1-102015 203 507

## Beschreibung

Die Erfindung betrifft bei niedrigen Temperaturen härtende Beschichtungsmittelzusammensetzungen zur Beschichtung von Oberflächen, insbesondere im Tauchlackierverfahren, ein stromloses Verfahren zu deren Applikation und Härtung sowie eine entsprechende aus der Beschichtungsmittelzusammensetzung hergestellte Beschichtung.

Es existieren zahlreiche Verfahren, um auf insbesondere metallischen Oberflächen mittels Tauchverfahren homogene Beschichtungen zu erzeugen. Hierbei benutzt man für die Erzeugung von insbesondere Korrosionschutzbeschichtungen (vorwiegend bestehend aus einer organischen Matrix und/oder organischen und/oder anorganischen Zusatzkomponenten) vorzugsweise die nachfolgend beschriebenen Verfahren.

Die klassischen Verfahren beruhen auf der Nutzung der rheologischen Eigenschaften der verwendeten Formulierungen, um eine vollständige Beschichtung eines gefügten Werkstückes zu erzielen. Obwohl durch kontinuierliches Rotieren des betreffenden Werkstückes nach dem Tauchvorgang eine Ansammlung von Beschichtungsmaterial an kritischen Stellen reduziert werden kann, ist es mit dieser Methode nicht möglich eine vollständig homogene Beschichtung zu erzielen. Zusätzlich können bei Stellen mit höheren Beschichtungsanteilen während des Trocknungs- und/oder Vernetzungsvorgangs Fehlstellen wie Blasenbildung und Kocher entstehen, die die Qualität der gesamten Beschichtung beeinträchtigen.

Die elektrophoretischen Verfahren vermeiden diese Problematik, indem elektrischer Strom eingesetzt wird, um eine gleichmäßige Beschichtung im Tauchlackierverfahren abzuscheiden. Mit diesem Verfahren gelingt die Erzeugung von homogenen Beschichtungen auf metallischen Werkstücken. Die abgeschiedenen Beschichtungen zeigen eine ausgesprochen gute Haftung im nassen Zustand zum metallischen Untergrund. Ohne Ablösung der Beschichtung ist es möglich, das Werkstück in einem nachfolgenden Spülschritt zu behandeln. Dies führt dazu, dass die vorab genannten schwer zugänglichen Stellen am Werkstück von überstehender Lackierlösung befreit werden und somit keine Fehlstellen während des Trocknungsvorgangs entstehen können. Diese Technik hat den Nachteil, dass neben der Menge an elektrischer Energie und neben den notwendigen speziellen Tauchbecken, die zu einer Erhöhung der Kosten führen, auch sogenannte Kantenfluchten auftreten, da elektrische Felder an makroskopischen Kanten inhomogen aufgebaut werden und die Kanten ungleichmäßig und eventuell auch unvollständig beschichtet werden. Bei dem Aufbau der Werkstücke müssen zudem Hohlräume vermieden werden, da an diesen Stellen ein Effekt vergleichbar mit dem Phänomen des Faraday'schen Käfigs auftritt. Aufgrund der Reduktion der zum Abscheiden notwendigen elektrischen Feldstärken kann an solchen Bereichen am Werkstück keine oder nur eine stark verringerte Beschichtung durch das Verfahren aufgebracht werden (Umgriffproblematik), was zu einer Beeinträchtigung der Beschichtungsqualität führt. Zusätzlich weist die elektrische Tauchlackierung (ETL) wie z.B. die kathodische Tauchlackierung (KTL) die im Folgenden angeführten Nachteile auf. So ist ein entsprechendes Tauchbad zusammen mit allen elektrischen und mechanischen Einrichtungen von der Temperaturführung, Stromversorgung und elektrischen Isolierung, der notwendigen Umwälzeinrichtungen und Zugabeeinrichtungen bis hin zur Entsorgung der Anolyt-Säure, die bei der elektrolytischen Beschichtung entsteht, und einer Ultrafiltration zur Lackrezyklierung sowie Steuereinrichtungen, sehr aufwändig aufgebaut. Die Prozessführung erfordert einen sehr hohen technischen Aufwand auch aufgrund der großen Stromstärken und Energiemengen sowie bei der Vergleichmäßigung der elektrischen Parameter über das Badvolumen und bei der präzisen Einstellung aller Prozessparameter sowie bei der Wartung und Säuberung der Anlage.

Die konventionellen autophoretischen Verfahren beruhen hingegen auf einem stromlosen Konzept bestehend aus einem Beizangriff der eingesetzten Substratoberfläche, bei welchem Metallionen aus der Oberfläche herausgelöst werden und aufgrund der Konzentration an metallischen Ionen an der entstehenden Grenzfläche eine Emulsion koaguliert. Obwohl diese Verfahren nicht die oben genannten Einschränkungen der elektrolytischen Verfahren bezüglich des Faraday'schen Käfigeffektes aufweisen, müssen die bei dem Prozess entstandenen Beschichtungen nach dem ersten Aktivierungsschritt in einem aufwändigen mehrstufigen Tauchverfahren fixiert werden. Desweiteren führt der Beizangriff zu einer unvermeidbaren Verunreinigung der aktiven Zone durch Metallionen, die aus den Zonen entfernt werden müssen. Zudem beruht die Methode auf einem chemischen Abscheidungsprozess, der nicht selbstregulierend ist und bei Bedarf nicht abgebrochen werden kann, wie es beispielsweise durch das Ausschalten eines elektrischen Stromes bei den elektrolytischen Verfahren möglich ist. Somit ist bei einer längeren Verweildauer der metallischen Substrate in den aktiven Zonen die Ausbildung einer zu hohen Schichtstärke unvermeidbar.

Die WO 2017/117169 A1 beschreibt bei niedriger Temperatur härtende, selbstabscheidende Beschichtungsmittel, die unter Verwendung blockierter Polyisocyanate härtbar sind. Diese Beschichtungsmittel sind jedoch in der Anwendung nicht zur Ausbildung von ionogenen Gelen befähigt, so dass sich sowohl der Abscheidungsmechanismus als auch die aufgebrachte Beschichtungsmittelschicht grundsätzlich von der vorliegenden Erfindung unterscheiden.

Aufgabe der vorliegenden Erfindung war es eine wässrige Beschichtungsmittelzusammensetzung bereitzustellen, die lagerstabil, einfach herstellbar und stromlos auf Metallionen freisetzenden Oberflächen abscheidbar ist und hierbei homogene, weitestgehend geschlossene und im Wesentlichen ebene Beschichtungen in größerer Schichtdicke ausbildet und insbesondere die oben angesprochenen Nachteile des Standes der Technik nicht aufweist. Die wässrige Beschichtungsmittelzusammensetzung sollte zudem thermisch härtbar sein und selbst ohne Katalysatoren für die Isocyanatvernetzungsreaktionen, insbesondere ohne metallhaltige Katalysatoren für die Isocyanatvernetzungsreaktionen bei möglichst niedrigen Einbrenntemperaturen (< 200°C; 30 min) Beschichtungen mit hoher Korrosionsbeständigkeit, insbesondere niedriger Unterwanderung im Salzsprühtest liefern. Weitere Aufgabe war die Bereitstellung eines Verfahrens zur Beschichtung von Metallionen freisetzenden Oberflächen von Substraten unter Verwendung der erfindungsgemäßen Beschichtungsmittelzusammensetzungen.

Die erfindungsgemäße Aufgabe konnte gelöst werden durch Bereitstellung einer wässrigen Beschichtungsmittelzusammensetzung, enthaltend
- mindestens eine Art organischer Polymerpartikel mit einer mittleren Teilchengröße von 10 bis 1000 nm, umfassend isocyanatreaktive Polymere (A), vorzugsweise bestehend aus isocyanatreaktiven Polymeren (A),
- eines oder mehrere ketoxim- und/oder pyrazolblockierte Polyisocyanate (B), enthaltend mindestens einen aromatischen Kohlenwasserstoffrest oder mindestens einen cycloaliphatischen Kohlenwasserstoffrest,
- mindestens ein polyanionisches Polymer (C)
- mindestens ein komplexes Fluorid (D) ausgewählt aus der Gruppe bestehend aus Hexa- oder Tetrafluoriden der metallischen Elemente der Gruppen IVb, Vb und VIb des Periodensystems der Elemente, und
- mindestens ein Aminosilan (E) enthaltend eine Silylgruppe der Formel Si(OR⁷)₃₋ᵢ(R⁸)ᵢ, worin R⁷ für einen Alkylrest mit 1 bis 4 Kohlenstoffatomen oder für eine Gruppe O=C-CH₃ steht, R⁸ für einen Alkylrest mit 1 bis 4 Kohlenstoffatomen steht und i für 0 oder 1 steht,
   wobei die wässrige Beschichtungsmittelzusammensetzung
- einen pH-Wert von 3 bis 5, vorzugsweise 3,5 bis 4,5, besonders bevorzugt 3,8 bis 4,2 aufweist, und
- einen Gesamtfestkörpergehalt (nach DIN ISO 3251, 1 g Probe, 60 min, 125 °C) von 5 bis 35 Gew.-%, vorzugsweise 10 bis 30 Gew.-%, besonders bevorzugt 15 bis 25 Gew.-% besitzt.

Die erfindungsgemäße wässrige Beschichtungsmittelzusammensetzung wird in Schritt II und gegebenenfalls auch Schritt V des nachfolgend aufgeführten erfindungsgemäßen Beschichtungsverfahrens eingesetzt.

Beim erfindungsgemäßen Beschichtungsverfahren handelt es sich um ein Verfahren zur Beschichtung der Metallionen freisetzenden Oberfläche eines Substrats, umfassend oder bestehend aus folgenden Schritten:
I. Bereitstellen eines Substrats mit einer Metallionen freisetzenden Oberfläche,
II. Kontaktieren der Metallionen freisetzenden Oberfläche mit einer erfindungsgemäßen wässrigen Beschichtungsmittelzusammensetzung unter Bildung einer organischen Beschichtung,
III. gegebenenfalls Spülen der organischen Beschichtung und
IV. gegebenenfalls Trocknen der organischen Beschichtung bei einer Temperatur von 10 bis 120°C in einem Zeitraum von 1 bis 40 min und Härten der organischen Beschichtung bei einer Peak-Metal-Temperatur von 120 bis 200 °C in einem Zeitraum von 5 bis 50 min; oder
V. gegebenenfalls Trocknen der organischen Beschichtung und Beschichten mit einer weiteren erfindungsgemäßen Beschichtungsmittelzusammensetzung und anschließendem Trocknen der in Schritt V gebildeten Beschichtung oder beider Beschichtungen und gemeinsamem Härten beider Beschichtungen bei einer einer Peak-Metal-Temperatur von 120 bis 200°C in einem Zeitraum von 5 bis 50 min.

Die erfindungsgemäße Beschichtungsmittelzusammensetzung ist befähigt in Schritt II auf der Metallionen freisetzenden Oberfläche des Substrats ein *ionogenes Gel* auszubilden.

lonogene Gele im Sinne dieser Erfindung werden beispielsweise von Braccini und Perez in Biomacromolecules 2001, 2, 1089-1096 oder Siew und Williams in Biomacromolecules 2005, 6, 963-969 beschrieben. Die in den beiden vorstehend genannten Druckschriften aufgeführten ionogenen Gele sind solche auf Basis polyanionischer Polymere (C), insbesondere der natürlich vorkommenden anionischen Polysaccharide des Pektin- und Alginat-Typs und der synthetischen Polyacrylsäure. Die polyanionischen Polymere (C) bilden in Gegenwart mehrwertiger Metallkationen in wässrigem Milieu besagte *ionogene Gele* aus.

Die ionogenen Gele der vorliegenden Erfindung enthalten neben den aus der Oberfläche des Substrats freigesetzten Metallionen in der Regel sämtliche Bestandteile der erfindungsgemäßen Beschichtungsmittelzusammensetzung.

Überraschenderweise wurde gefunden, dass die Substrate mit Metallionen freisetzenden Oberflächen bei der Behandlung mit der wässrigen erfindungsgemäßen Beschichtungsmittelzusammensetzung eine Beschichtung auf Basis eines ionogenen Gels bilden und dass die auf dem Substrat abgeschiedene ionogene Gelschicht das Hindurchdiffundieren weiterer aus der Metallionen freisetzenden Oberfläche herausgelöster Kationen gestattet, so dass die eine Beschichtung mit weiteren erfindungsgemäßen Beschichtungszusammensetzungen in weiteren Beschichtungsbädern/stufen in Schritt V erfolgen kann.

Die in Schritt V erhaltenen getrockneten und/oder gehärteten Beschichtungen können mit konventionellen Basislacken und/oder Klarlacken nachbeschichtet werden.

Da das erfindungsgemäße Beschichtungsverfahren erfindungsgemäß zu homogenen, weitestgehend geschlossenen Beschichtungen führt, muss die jeweils letzte Beschichtung im oben skizzierten Verfahren *spülresistent* sein. Der Begriff *spülresistent* im Sinne dieser Erfindung bedeutet, dass unter den Bedingungen der der industriellen Fertigung die Beschichtung durch einen üblichen industriellen Spülvorgang im Wesentlichen bestehen bleibt, so dass eine geschlossene Beschichtung resultiert.

Im Folgenden werden die Bestandteile, insbesondere die bevorzugten Bestandteile der erfindungsgemäßen Beschichtungsmittelzusammensetzungen, die besonders geeigneten Substrate sowie deren mögliche Vorbehandlung und die Ausführung des erfindungsgemäßen Verfahrens detaillierter beschrieben.

### Organische Polymerpartikel, umfassend isocyanatreaktive Polymere (A)

Die wässrige erfindungsgemäße Beschichtungsmittelzusammensetzung enthält organische Polymerpartikel umfassend *gegenüber Isocyanatgruppen reaktive (kurz: isocyanatreaktive)* Polymere (A). Die isocyanatreaktiven Polymere (A) sind neben deren Reaktionspartnern, den ketoxim- und/oder pyrazolblockierten Polyisocyanaten (B), und den polyanionischen Polymeren (C) die hauptsächlichen Filmbildner.

Die Reaktivität gegenüber Isocyanatgruppen und somit bei höheren Temperaturen auch gegenüber blockierten Isocyanatgruppen resultiert aus der Präsenz isocyanatreaktiver Gruppen in diesen Polymeren. Zu den gegenüber Isocyanatgruppen reaktiven Gruppen zählen unter anderem und insbesondere Hydroxylgruppen, primäre und sekundäre Aminogruppen sowie Carboxylgruppen, Carbonsäureamidgruppen oder Thiolgruppen, worunter Hydroxylgruppen besonders bevorzugt sind.

Vorzugsweise handelt es sich bei organischen Polymerpartikeln, welche eines oder mehrere isocyanatreaktive Polymere (A) umfassen, um solche, die in Form einer Primärdispersion vorliegen. Die Dispersionen der organischen Primärpartikel können jedoch prinzipiell auch als Sekundärdispersionen erhalten werden.

Der Begriff der *Dispersion* umfasst hierin die Begriffe *Suspension* und *Emulsion.*

Primärdispersionen werden in der Regel durch Emulsionspolymerisation erhalten, während bei Sekundärdispersionen Monomere in einem organischen Lösemittel gelöst werden, eine Polymerisation im organischen Lösemittel erfolgt, das Lösemittel entfernt wird und das Polymer in eine wässrige Phase einemulgiert wird.

Die mittlere Partikelgröße (Z-average; Z-Mittel) der organischen Polymerpartikel liegt im Bereich von 10 bis 1000 nm, bevorzugt im Bereich von 50 bis 900 nm und ganz besonders bevorzugt im Bereich von 400 bis 800 nm, gemessen mittels dynamischer Lichtstreuung unter Verwendung eines Malvern Zetasizer (Software v7.02) von der Firma Malvern (Herrenberg, Deutschland).

Die gegenüber Isocyanatgruppen reaktiven Polymere (A) (kurz: isocyanatreaktive Polymere (A)) werden vorzugsweise gewählt aus der Gruppe der Polyacrylate, Polyurethane und Polyepoxide sowie Hybrid-Systemen umfassend zwei oder mehr dieser Polymere.

Die stabilisierten organischen Polymerpartikel werden besonders bevorzugt so ausgewählt, dass das enthaltene isocyanatreaktive Polymer (A) aus der Gruppe bestehend aus nichtionisch stabilisierten Polyepoxy-Dispersionen, nichtionisch stabilisierten Polyurethan-Dispersionen und nichtionisch stabilisierten Polyacrylat-Dispersionen oder den sich daraus ergebenden Hybridsystemen gewählt ist.

Hybridsysteme können vom Typ in drei Gruppen von Hybridsystemen unterteilt werden,
a. Hybridsysteme, die durch reines Vermischen der verschiedenen Dispersionen erzeugt werden,
b. Hybridsysteme, die eine chemische Verbindung zwischen den unterschiedlichen Polymerarten aufweisen; und
c. Hybridsysteme, in denen die unterschiedlichen Polymerarten interpenetrierende Netzwerke (IPN) ausbilden.

Typische Hybridsysteme, die unter die obigen Typen fallen sind beispielsweise Polyacrylat-Polyurethan-Hybrid-Dispersionen.

Üblicherweise werden solche Polyacrylat-Polyurethan-Hybrid-Dispersionen durch Emulsionspolymerisation eines oder mehrerer (meth)acrylischer und/oder vinylischer Monomere in einer wässrigen Polyurethan-Dispersion hergestellt. Es ist aber auch möglich, die Polyacrylat-Polyurethan-Hybrid-Dispersion als Sekundärdispersion herzustellen.

Unter den Begriff *(meth)acrylisch* fallen die Begriffe acrylisch als auch methacrylisch. Ein (meth)acrylisches Monomer kann daher eine Acrylgruppe oder eine Methacrylgruppe tragen. Unter den Begriff *vinylisch* werden alle eine Vinylgruppe tragenden, jedoch nicht unter den Begriff *(meth)acrylisch* fallenden polymerisierbaren Monomere gezählt.

Wässrige Polyacrylat-Polyepoxid-Hybrid-Dispersionen werden üblicherweise durch Additionsreaktionen eines bifunktionellen Epoxids mit bifunktionellen Aminmonomerbausteinen und anschließender Reaktion mit einem Polyacrylat mit ausreichenden Carboxylfunktionen hergestellt. Die Wasserdispergierbarkeit kann beispielsweise durch Carboxylatgruppen, die mit Aminen in anionische Gruppen überführt wurden und anschließender Dispergierung in Wasser erzielt werden.

Die organischen Polymerpartikel, umfassend eines oder mehrere isocyanatreaktive Polymere (A) können anionisch stabilisiert, nichtionisch stabiliert oder gleichzeitig anionisch und nichtionisch stabilisiert vorliegen. Die Stabilisierung erfolgt üblicherweise durch Emulgatoren.

Man unterscheidet zwischen *externen Emulgatoren* und *internen Emulgatoren.* Externe Emulgatoren sind im Gegensatz zu internen Emulgatoren nicht Bestandteil des Polymeraufbaus, sondern eigenständige Spezies. Externe Emulgatoren zählen im Rahmen dieser Erfindung zu weiter unten beschriebenen Additiven (G).

Die Stabilisierung mit externen Emulgatoren kann beispielsweise durch anionische Emulgatoren bereits im Rahmen der Emulsionspolymerisation erfolgen. Typische anionische Emulgatoren sind sulfatierte oder sulfonierte anionische Emulgatoren, vorzugsweise folgender Strukturen R^{t}-(OCH₂CH₂)ₐ-(O)_{b}-SO₃⁻ M⁺, mit R^{t} = Alkyl oder Aryl, a = 8 bis 30, b = 0 oder 1 und M⁺ = Alkalimetallkation oder NH₄⁺.

Durch die Umhüllung der organischen Partikel mit den anionischen Emulgatormolekülen wird deren Oberfläche negativ aufgeladen, was zu einer elektrostatischen Abstoßung der organischen Polymerpartikel führt.

Die externe Stabilisierung kann jedoch auch durch nichtionische Emulgatoren erfolgen. Typische nichtionische Emulgatoren besitzen vorzugsweise folgende Strukturen R^{t}-(OCH₂CH₂)ₐ-OH mit R^{t} = Alkyl oder Aryl, und a = 8 bis 50. Im Gegensatz zur elektrostatischen Abstoßung der mit anionischen Emulgatoren hergestellten Dispersionen beruht der Stabilisierungsmechanismus nichtionischer Emulgatoren auf sterischen Effekten.

Interne anionische Emulgatoren - also in das isocyanatreaktive Polymer (A) eingebaute Emulgatoren - weisen in der Regel Sulfonat-Gruppen, Sulfat-Gruppen oder Carboxylat-Gruppen auf und besitzen mindestens eine funktionelle Gruppe die mit funktionellen Gruppen der anderen Polymerbestandteile reagieren kann.

So kann beispielsweise die, eine Sulfonatgruppe tragende Verbindung der Formel H₂N-CH₂-CH₂-NH-(CH₂)ₓ-SO₃Na, mit x = 2 oder 3, insbesondere über die primäre Aminogruppe, prinzipiell aber auch über die sekundäre Aminogruppe mit Isocyanatgruppen beim Aufbau von Polyurethanen oder mit Oxirangruppen beim Aufbau von Polyepoxiden zur Reaktion gebracht und in das Polymer eingebaut werden.

Ein typischer Vertreter des Carboxylatgruppen-Typs ist beispielsweise die Dimethylolpropansäure bzw. deren versalzte Form, die über die Hydroxylgruppen durch Reaktion mit Isocyanatgruppen in Polyurethane oder durch Reaktion mit Oxirangruppen in Polyepoxide einbaubar ist.

Interne nichtionische Emulgatoren weisen in der Regel hydrophile Polyalkylenoxidketten auf. Besonders geeignete interne nichtionische Emulgatoren enthalten oder bestehen aus Polyethylenoxidketten oder Poly(ethylenoxid-propylenoxid)ketten, wobei bei letzteren der molare Propylenoxidanteil vorzugsweise geringer als der des Ethylenoxids ist, um eine ausreichende Hydrophilie zu gewährleisten. Die Polyalkylenoxidketten können sowohl in die Hauptkette des Polymerrückgrats, als auch als Seitenkette oder terminal, eingebaut werden.

Der Einbau derartiger Polyalkylenoxidketten als interne nichtionische Emulgatoren in die isocyanatreaktiven Polymere (A) erfolgt zweckmäßiger Weise durch die Reaktion zwischen reaktiven funktionellen Gruppen am zu stabilisierenden Polymer und gegenüber den reaktiven Gruppen am Polymer reaktiven funktionellen Gruppen der die Polyalkylenoxidkette(n) enthaltenden Spezies.

Das intern nichtionisch zu stabilisierende Polymer wird vorzugsweise ausgewählt aus der Gruppe bestehend aus Polyacrylaten, Polyurethanen, Polyepoxiden, Urethanacrylate, aromatischen und (cyclo)-aliphatischen Epoxyacrylate und Polyestern sowie deren Mischung. Bei den Polyurethanen und Urethanacrylaten erfolgt vorzugsweise eine Anbindung der Polyalkylenoxidkette(n) über im Polyurethan oder Urethanacrylat noch vorhandene freie Isocyanatgruppen an Hydroxygruppen oder Aminogruppen, vorzugsweise genau eine Hydroxylgruppe oder eine Aminogruppe der Polyalkylenoxidkette(n) enthaltenden Spezies.

Unter reaktiven funktionellen Gruppen am nichtionisch zu stabilisierenden Polymer werden im Rahmen der vorliegenden Erfindung insbesondere Isocyanatgruppen, Hydroxylgruppen, Carboxylgruppen, Oxirangruppen, Vinylgruppen und Aminogruppen verstanden.

Eine typische und bevorzugte Anbindungsreaktion, in welcher die Polyalkylenoxidekette(n) enthaltende Spezies an das zu stabilisierende Polymer angebunden werden kann/können ist die Urethanbildung zwischen einer Hydroxylgruppe und einer Isocyanatgruppe. Die Reaktion kann in Abhängigkeit der Viskosität vorzugsweise in Gegenwart von organischen Lösemitteln vorgenommen werden, die anschließend wieder entfernt werden. So können beispielsweise ein isocyanat-funktionalisiertes Polyethylenglykolmolekül als eine Polyalkylenoxidkette enthaltende Spezies und ein Polyesterpolyol als nichtionisch zu stabilisierendes Polymer, vorzugsweise mit einem zahlenmittleren Molekulargewicht Mₙ im Bereich von 1000 bis 3000 g/mol, eingesetzt werden. Wobei als reaktive Gruppen Hydroxylgruppen am ursprünglichen Bindemittel vorhanden sind, die zur Bildung von Urethanbindungen befähigt sind. Vorteilhafterweise weist das eingesetzte Polyesterpolyol reaktive Gruppen im Bereich von 100 g/eq bis 5000 g/eq auf.

Vorteilhafterweise ist die eine oder mehrere Polyalkylenoxidketten enthaltende Spezies ein mit einer terminalen Kohlenwasserstoffgruppe versehenes Oligomer aus Ethylenglykoleinheiten, wobei die Anzahl der Ethylenglykoleinheiten im Oligomer vorzugsweise 2 bis 20, besonders bevorzugt 5 bis 10 beträgt, und das Oligomer eine gegenüber dem nichtionisch zu stabilisierenden Polymer reaktive Gruppe, vorzugsweise eine Hydroxylgruppe oder Aminogruppe, aufweist.

Besonders bevorzugt weist die eine oder mehrere Polyalkylenoxidketten enthaltende Spezies ein zahlenmittleres Molekulargewicht Mₙ bestimmt mittels Gelpermeationschromatographie (in THF bei 25 °C unter Verwendung eines Polystyrolstandards) zwischen 300 und 1000 g/mol auf. Ganz besonders bevorzugt besitzt die eine oder mehrere Polyalkylenoxidketten enthaltende Spezies als terminale Kohlenwasserstoffgruppe eine Alkylgruppe mit 1 bis 4 Kohlenstoffatomen oder eine Arylgruppe mit 6 bis 12 Kohlenstoffatomen.

Die Herstellung des intern nichtionisch stabilisierten isocyanatreaktiven Polymers (A) erfolgt über eine kovalente Anbindung der eine oder mehrere Polyalkylenoxidketten enthaltenden Spezies an das vorgenannte Polymer. Das so erzeugte nichtionisch stabilisierte isocyanatreaktiven Polymer (A) bildet in wässrigen Phasen, vorzugsweise über einen Zeitraum von mindestens 6 bis 12 Monaten, eine stabile Dispersion.

Eine weitere Variante besteht darin, dass die Polyalkylenoxidkette enthaltende Spezies ein Oligomer aus Ethylenglykoleinheiten ist, wobei die Anzahl der Ethylenglykoleinheiten im Oligomer vorzugsweise 2 bis 20, besonders bevorzugt 5 bis 10 ist, das Oligomer eine gegenüber dem nichtionisch zu stabilisierenden Polymer reaktive Gruppe, vorzugsweise eine Hydroxylgruppe oder Aminogruppe, aufweist, und mindestens eine weitere terminale reaktive Gruppe wie beispielsweise eine Hydroxylgruppe, Aminogruppe, Vinylgruppe, Acrylgruppe oder Methacrylgruppe besitzt. Diese Gruppen können entweder durch radikalische Reaktion oder durch Additions- oder Kondensations-Reaktionen während des Einbrennprozesses zu einer Vernetzung beitragen. Dadurch kann eine vernetzte, geschlossene Beschichtung erzeugt werden, die beständig gegenüber Wasser, Chemikalien und Korrosion ist und eine verbesserte Kratzfestigkeit, Bleistifthärte, eine hohe Flexibilität, Dehnbarkeit, Kaltverformbarkeit und eine gute Haftung zeigt.

Die organischen Polymerpartikeln, welche eines oder mehrere isocyanatreaktive Polymere (A) umfassen, können zusätzlich vorteilhafterweise durch Silane, insbesondere die weiter unten beschriebenen Aminosilane (E) und/oder durch phosphorgruppenhaltige und/oder aminhaltige organische Spezies oder Phosphate oberflächenmodifiziert sein. Derartige Spezies können kovalenten oder durch Physisorption oder Chemisorption an die organischen Polymerpartikel gebunden sein, und können funktionale Gruppen zur Anbindung an die zu behandelnde Substratoberfläche aufweisen. Organische Partikel, die keine oder unpassende, reaktive Gruppen für eine Anbindung auf ihren Oberflächen haben, können durch Adsorption der intern stabilisierenden Emulgator-Reste, insbesondere der Polyethylenglykolabschnitte an die zu beschichtende Oberfläche gebunden werden.

Die stabilisierten isocyanatreaktiven Polymere (A) haben zusätzliche emulgierende Eigenschaften und können dadurch die ionogene Abscheidung von anderen Bindemitteln und Partikeln erleichtern.

Prinzipiell ist es möglich eine nichtionische Stabilisierung mit einer anionischen Stabilisierung zu kombinieren und/oder eine externe Stabilisierung mit einer interen Stabilisierung.

Besonders bevorzugt sind nichtionisch stabilisierte Polyexpoxy-Dispersionen, insbesondere solche, die einen oder mehrere Polyethylenoxidreste enthalten.

Typischerweise erfolgt die Bildung der Beschichtung ausschließlich oder nahezu ausschließlich über eine ionogene Gelbildung wie sie Eingangs beschrieben wurde, so dass autophoretische Prozesse nicht oder nur in äußerst untergeordneter Weise stattfinden. Durch den im nachfolgenden Absatz beschriebenen Test lassen sich auf einfache Weise ganz besonders gut geeignete Beschichtungsmittelzusammensetzungen finden, bei welchen kaum oder keine Autophorese stattfindet.

Ganz besonders bevorzugt einsetzbare stabilisierte organische Polymerpartikel, umfassend eines oder mehrere isocyanatreaktive Polymere (A) sind demnach solche, die durch nachfolgend beschriebenen Test ausgewählt werden können:
1) Erstellung eines wässrigen Gemischs aus vollentsalztem (VE)-Wasser, 0,5 Gew.-% eines unten näher beschriebenen polyanionischen Polymers (C) und 10 Gew.-% der zu untersuchenden nichtionisch stabilisierten Dispersion;
2) Einstellung des Gemisches mit Hilfe von Hexafluorozirkonsäure auf einen pH-Wert von 2 bis 3;
3) Tauchen eines gereinigten Substrats für 5 Minuten bei Raumtemperatur (d. h. 23 °C) in vorstehend beschriebene Lösung;
4) im Falle einer Abscheidung wird eine Gegenprüfung (ohne polyanionisches Polymer (C)) durchgeführt, dazu man stellt ein Gemisch aus VE-Wasser, und 10 Gew.-% der zu untersuchenden nichtionisch stabilisierten Dispersion her;
5) das unter 4) hergestellte Gemisch wird mittels Hexafluorozirkonsäure wieder auf einen pH von 2 bis 3 eingestellt und
6) die unter 3) beschriebene Prüfung wird wiederholt.

Ergibt sich unter 3) eine organische Abscheidung auf dem Substrat und unter 6) ohne polyanionisches Polymer (C) keine Abscheidung, so sind die stabilisierten organischen Polymerpartikel, umfassend eines oder mehrere isocyanatreaktive Polymere (A), für das erfindungsgemäße Verfahren ganz besonders gut geeignet.

Der Gehalt der organischen Polymerpartikel, umfassend isocyanatreaktive Polymere (A), bezogen auf das Gesamtgewicht der wässrigen Beschichtungsmittelzusammensetzung beträgt vorzugsweise 3 bis 25 Gew.-%, besonders bevorzugt 8 bis 20 Gew.-%, ganz besonders bevorzugt 10 bis 18 Gew.-%, insbesondere 11 bis 17 Gew.-%. Der Gehalt an organischen Polymerpartikeln wird an der Dispersion der organischen Polymerpartikel, vor deren Einbringung in die erfindungsgemäße wässrige Beschichtungsmittelzusammensetzung nach DIN ISO 3251 (1 g Probe, 60 min, 125 °C) bestimmt und anschließend auf das Gesamtgewicht der wässrigen Beschichtungsmittelzusammensetzung bezogen.

### Ketoxim- und/oder pyrazolblockierte Polvisocvanate (B)

Im Rahmen der vorliegenden Erfindung werden unter dem Begriff der *blockierten Polyisocyanate* solche Polyisocyanate verstanden, die mindestens zwei blockierte Isocyanatgruppen aufweisen.

Unter einer *blockierten Isocyanatgruppe* ist eine *Isocyanatgruppe* zu verstehen, die durch Additionsreaktion an ein sogenanntes Blockierungsmittel blockiert beziehungsweise verkappt wurde und wobei die Additionsreaktion bei höheren Temperaturen, gegebenenfalls unter Einsatz geeigneter Katalysatoren, reversibel ist.

*Blockierte Polyisocyanate* enthalten im Sinne dieser Erfindung - und wie auf dem Gebiet der Beschichtungsmittelzusammensetzungen üblich - keine freien Isocyanatgruppen und sind somit, soweit technisch möglich, als zu 100% blockierte Polyisocyanate aufzufassen.

Die Blockierung der Polyisocyanate (B) erfolgt im Rahmen dieser Erfindung durch Ketoxime und/oder Pyrazole, insbesondere durch Ketoxime oder Pyrazole.

Die durch Reaktion von NCO-Gruppen untereinander gebildeten Strukturen, werden allerdings, selbst wenn diese reversibel, beispielsweise durch Hitze, zu NCO-Gruppen rückgebildet werden können, im Rahmen dieser Erfindung nicht als *blockierte Isocyanatgruppen* betrachtet. So wird hierin beispielsweise eine aus zwei NCO-Gruppen gebildete Uretdiongruppe nicht als die gegenseitige Blockierung zweier NCO-Gruppen angesehen. Entsprechendes gilt auch für die allerdings stabileren Isocyanuratgruppen, Iminooxadiazindiongruppen, Allophanatgruppen und Biuretgruppen, soweit diese überhaupt zu freien NCO-Gruppen rückbildbar sind.

### Polyisocyanate

Die zur Herstellung der erfindungsgemäß einzusetzenden blockierten Polyisocyanate verwendeten freien Polyisocyanate lassen sich durch folgende allgemeine Formel (I) beschreiben:

R¹-[NCO]ₙ (I)

worin
R¹ für einen organischen NCO-gruppenfreien organischen Rest steht, enthaltend mindestens einen aromatischen Kohlenwasserstoffrest oder mindestens einen cycloaliphatischen Kohlenwasserstoffrest und gegebenenfalls eine oder mehrere Gruppen gewählt aus der Gruppe bestehend aus Isocyanuratgruppen, Iminooxadiazindiongruppen, Uretdiongruppen, Allophanatgruppen, Biuretgruppen, Urethangruppen, Harnstoffgruppen, Ethergruppen und Estergruppen; und
n für 2 bis vorzugsweise 10, vorzugsweise 3 bis 8, besonders bevorzugt 3 bis 6 steht.

Bei den Polyisocyanaten der Formel (I) kann es sich um aromatische oder cycloaliphatische Polyisocyanate handeln.

Im Falle der aromatischen Polyisocyanate enthält der Rest R¹ mindestens einen aromatischen Kohlenwasserstoffrest. Hierbei handelt es sich vorzugsweise um einen substituierten oder unsubstituierten sechsgliedrigen aromatischen Kohlenwasserstoff-Ring. Als Substituenten am sechsgliedrigen aromatischen Kohlenwasserstoff-Ring sind insbesondere Alkylgruppen mit 1 bis 3 Kohlenstoffatomen geeignet.

In den aromatischen Polyisocyanaten ist vorzugsweise mindestens eine der n Isocyanatgruppen gemäß Formel (I) am aromatischen Kohlenwasserstoffrest gebunden. Besonders bevorzugt sind alle n Isocyanatgruppen gemäß Formel (I) vorzugsweise am aromatischen Kohlenwasserstoffrest gebunden.

Typische und im Rahmen der vorliegenden Erfindung bevorzugte Spezies der Formel (I) enthalten Toluylendiisocyanat-basierte Kohlenwasserstoffreste und/oder Diphenylmethandiisocyanat-basierte Kohlenwasserstoffreste im Rest R¹, vorzugsweise Diphenylmethandiisocyanat (MDI)-basierte Kohlenwasserstoffreste.

Unter dem Begriff Toluylendiisocyanat (TDI) sind hierin das 2,4-TDI und das 2,6-TDI sowie deren Isomeren-Mischung zusammengefasst. Unter dem Begriff Diphenylmethandiisocyanat (MDI) sind hierin das 4,4'-MDI, 2,4'-MDI, 2,2'-MDI als auch das sogenannte technische Diphenylmethandiisocyanat (häufig fälschlicherweise auch polymeres MDI genannt) zusammengefasst. Technisches MDI lässt sich durch die allgemeine Struktur 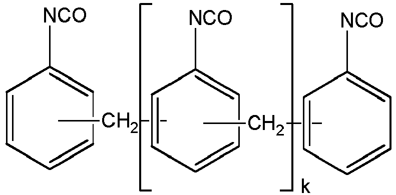 wiedergeben, worin k vorzugsweise 0 bis 10 ist. Technisches MDI ist eine Mischung von Spezies der vorgenannten Formel, wobei vorzugsweise 30 bis 80 Gew.-% auf eine Spezies mit k = 0 entfallen und weniger als 15 Gew.-% auf Spezies mit k ≥ 6, jeweils bezogen auf das Gesamtgewicht des technischen MDI.

Ist hierin generell von *isocyanat-basierten Kohlenwasserstoffresten* die Rede, so ist damit der Rest eines Isocyanats bzw. Polyisocyanats gemeint, der verbleibt, wenn das Isocyanat bzw. Polyisocyanat von seinen Isocyanatgruppen "befreit" ist. So ist beispielsweise ein *Toluylenrest* ein *Tolyulendiisocyanat-basierter Kohlenwasserstoffrest.*

Im Falle der cycloaliphatischen Polyisocyanate enthält der Rest R¹ mindestens einen cycloaliphatischen Kohlenwasserstoffrest. Hierbei handelt es sich vorzugsweise um einen substituierten oder unsubstiuierten sechsgliedrigen cycloaliphatischen Kohlenwasserstoff-Ring. Als Substituenten am sechsgliedrigen cycloaliphatischen Kohlenwasserstoff-Ring sind insbesondere Alkylgruppen mit 1 bis 3 Kohlenstoffatomen geeignet.

In den cycloaliphatischen Polyisocyanaten ist vorzugsweise mindestens eine der n Isocyanatgruppen gemäß Formel (I) am cycloaliphatischen Kohlenwasserstoffrest gebunden. So ist beispielsweise beim Isophorondiisocyanat eine Isocyanatgruppe direkt an 1-Position eines 3,5,5-trimethylsubsituierten Cyclohexanrests gebunden während die zweite Isocyanatgruppe über eine Methylengruppe an die 5-Position des Cyclohexanrests gebunden ist. Besonders bevorzugt sind bei den cylcoaliphatischen Polyisocyanaten alle n Isocyanatgruppen gemäß Formel (I) am cylcoaliphatischen Kohlenwasserstoffrest gebunden. Dies ist beispielsweise beim Dicyclohexylmethandiisocyanat (H₁₂MDI) der Fall. Unter dem Begriff Dicyclohexylmethandiisocyanat (H₁₂MDI) sind hierin das 4,4'-H₁₂MDI, 2,4'-H₁₂MDI, 2,2'-H₁₂MDI als auch hydriertes technisches Diphenylmethandiisocyanat zusammengefasst. Letzteres ergibt sich durch eine im Wesentlichen vollständige Hydrierung der Phenylreste des technischen MDI.

Typische und im Rahmen der vorliegenden Erfindung bevorzugte Spezies der Formel (I) enthalten Isophorondiisocyanat (IPDI)-basierte Kohlenwasserstoffreste und/oder Dicyclohexylmethandiisocyanat-basierte Kohlenwasserstoffreste im Rest R¹, vorzugsweise Dicyclohexylmethandiisocyanat-basierte Kohlenwasserstoffreste.

Der Rest R¹ enthält mindestens einen aromatischen Kohlenwasserstoffrest oder mindestens einen cycloaliphatischen Kohlenwasserstoffrest, er kann aber auch mehrere dieser Reste enthalten. Bevorzugt enthält der R¹ mindestens 2 aromatische Kohlenwasserstoffreste oder mindestens 2 cycloaliphatische Kohlenwasserstoffreste. Besonders bevorzugt enthält der Rest R¹ mindestens 3 aromatische Kohlenwasserstoffreste oder mindestens 3 cycloaliphatische Kohlenwasserstoffreste und ganz besonders bevorzugt mindestens 4 aromatische Kohlenwasserstoffreste oder mindestens 4 cycloaliphatische Kohlenwasserstoffreste.

Beispielsweise kann durch Trimerisierung eines aromatischen Diisocyanats wie beispielsweise eines Toluylendiisocyanats aus drei Isocyanatgruppen eine Isocyanuratgruppe oder Iminooxadiazindiongruppe gebildet werden, an welche drei Toluylenmonoisocyanatgruppen gebunden sind. Ein derartiger Rest R¹ enthält drei alkylsubsituierte aromatische Kohlenwasserstoffreste (d. h. drei Toluylenreste) und eine Isocyanuratgruppe. An diesen Rest R¹ sind wiederum drei NCO-Gruppen gebunden, wobei im Sinne der obigen Formel (I) n = 3 resultiert. Bei einer entsprechenden Trimerisierung von beispielsweise 4,4'-Diphenylmethandiisocyanat werden sogar 6 aromatische Kohlenwasserstoffreste in den Rest R¹ eingebaut, für welchen ebenfalls gilt, dass dieser eine Isocyanuratgruppe trägt und dass im Sinne der obigen Formel (I) n = 3 ist.

Prinzipiell sind auch höher Oligomere erhältlich, indem beispielsweise die freien NCO-Gruppen eines Trimerisats weitere Diisocyanatmoleküle anlagern, wobei Produkte mit höherem Polymerisationsgrad entstehen. So kann sich beispielsweise durch Addition zweier weiterer Diisocyanate ein weiterer Isocyanuratring bilden, wodurch die NCO-Funktionalität der Spezies der Formel (I) um 1 ansteigt (n = 4).

Höhermolekulare Reste R¹ lassen sich jedoch nicht nur durch Oligomerisierung wie beispielsweise eine Dimerisierung (Uretdionbildung) oder durch die vorgenannte gegebenenfalls auch mehrfache Trimerisierung oder durch eine Biuret- oder Allophanatbildung erreichen, sondern auch durch eine *Adduktbildung* oder eine sogenannte *Präpolymerisatbildung.*

Von *NCO-Addukten* ist dann die Rede, wenn beispielsweise die zur Herstellung der Spezies der Formel (I) einsetzbaren Diisocyanate mit Verbindungen, also Spezies mit einem konkreten Molekulargewicht, vorzugsweise einem niedrigen Molekulargewicht umgesetzt werden, die insbesondere Hydroxylgruppen, primäre und/oder sekundäre Aminogruppen und/oder andere gegenüber Isocyanatgruppen reaktive Gruppen tragen. Zu solchen Verbindungen zählen insbesondere Polyole wie beispielsweise solche mit drei Hydroxylgruppen wie Glycerin, Trimethylolpropan und Hexantriol, solche mit vier Hydroxylgruppen wie Pentaerythritol oder solche mit sechs Hydroxylgruppen wie Dipentaerythritol. Die Hydroxylgruppen dieser Verbindungen können unter Ausbildung von Urethangruppen mit einer Isocyanatgruppe eines Di- oder Polyisocyanats reagieren, wobei bei entsprechendem Isocyanatgruppen-Überschuss Polyisocyanate gemäß Formel (I) gebildet werden, die im Rest R¹ Urethangruppen enthalten.

Von *NCO-Präpolymerisaten* ist dann die Rede, wenn beispielsweise die zur Herstellung der Spezies der Formel (I) einsetzbaren Di- oder Polyisocyanate mit polymeren Spezies, das heißt Spezies die eine Polydispersität aufweisen, umgesetzt werden, wobei die polymeren Spezies insbesondere Hydroxylgruppen, primäre und/oder sekundäre Aminogruppen und/oder andere gegenüber Isocyanatgruppen reaktive Gruppen tragen. Derartige polymere Spezies sind beispielsweise Polyesterpolyole, Polyetherpolyole oder Polyetherpolyesterpolyole. Die Hydroxylgruppen dieser polymeren Spezies können unter Ausbildung von Urethangruppen mit einer Isocyanatgruppe eines Diisocyanats reagieren, wobei bei entsprechendem Isocyanatgruppen-Überschuss Polyisocyanate gemäß Formel (I) gebildet werden, die im Rest R¹ Urethangruppen sowie Ethergruppen oder Estergruppen oder Ether- sowie Estergruppen enthalten.

In der vorliegenden Erfindung werden im Folgenden *hydrophobe blockierte Polyisocyanate* und *hydrophile blockierte Polyisocyanate* unterschieden. Besonders bevorzugt sind die hydrophoben blockierten Polyisocyanate.

Um hydrophobe blockierte Polyisocyanate zu erhalten, werden sämtliche n NCO-Gruppen in Formel (I) mit untenstehenden Blockierungsmitteln umgesetzt und der Rest R¹ enthält keine hydrophilen Gruppen wie beispielsweise Polyethylenoxid-Reste, Sulfonatgruppen, Sulfatgruppen und/oder Carboxylatgruppen.

Um hydrophile blockierte Polyisocyanate zu erhalten, werden Polyisocyanate der Formel (I) eingesetzt, die
a. im Rest R¹ hydrophile Gruppen wie beispielsweise Polyethylenoxid-Reste, Sulfonatgruppen, Sulfatgruppen und/oder Carboxylatgruppen aufweisen; und/oder
b. bei welchen mindestens eine, vorzugsweise genau eine der n NCO-Gruppen mit einem der untenstehenden Hydrophilisierungsmittel umgesetzt wird.

Der Gehalt der ketoxim- und/oder pyrazol blockierten Polyisocyanate (B), wird vorzugsweise so gewählt, dass das Verhältnis der Isocyanatgruppen in dem oder den blockierten Polyisocyanaten (B) zu den isocyanatreaktiven Gruppen im isocyanatgruppen reaktiven Polymer (A) 0,5 bis 2, besonders bevorzugt 0,75 bis 1,8, ganz besonders bevorzugt 1 bis 1,6 und insbesondere 1,2 bis 1,6 beträgt.

Der Isocyanatgruppen-Gehalt der ketoxim- und/oder pyrazol-blockierten Polyisocyanate (B) beträgt vorzugsweise 8 bis 22 Gew.-%, besonders bevorzugt 9 bis 21 Gew.-%, ganz besonders bevorzugt 12 bis 20 Gew.-%. Die Bestimmung des Isocyanatgruppen-Gehalts erfolgte nach DIN ISO 11909: 2007.

Handelt es sich bei den ketoxim- und/oder pyrazol-blockierten Polyisocyanaten (B) um hydrophilisierte Spezies, so beträgt deren Isocyanatgruppen-Gehalt vorzugsweise 8 bis 15 Gew.-%, besonders bevorzugt 9 bis 13 Gew.-%, ganz besonders bevorzugt 9,5 bis 12,5 Gew.-%.

Handelt es sich bei den ketoxim- und/oder pyrazol-blockierten Polyisocyanaten (B) um nicht-hydrophilisierte, d.h. hydrophobe Spezies, so beträgt deren Isocyanatgruppen-Gehalt vorzugsweise 10 bis 22 Gew.-%, besonders bevorzugt 12 bis 21 Gew.-%, ganz besonders bevorzugt 13 bis 20 Gew.-%.

### Blockierungsmittel

Die im Rahmen der vorliegenden Erfindung geeigneten Blockierungsmittel sind Ketoxime und Pyrazole.

Die bevorzugten Ketoxime der allgemeinen Formel (II) sind durch Umsetzung von Hydroxylamin mit einem Keton nach folgendem Reaktionsschema erhältlich 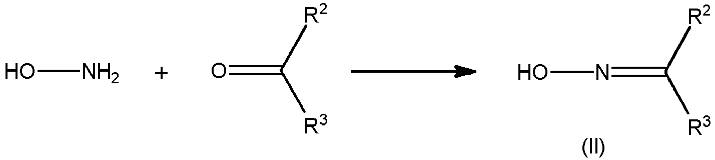 worin
die Reste R² und R³ unabhängig voneinander für Alkylreste mit 1 bis 6, vorzugsweise 1 bis 4, besonders bevorzugt 1 bis 3 Kohlenstoffatomen stehen; oder R² und R³ gemeinsam einen Alkylenrest mit 3 bis 5 Kohlenstoffatomen bilden.

Besonders bevorzugt handelt es sich bei R² und R³ um Ethyl und/oder Methyl. Ganz besonders bevorzugt steht R² für Methyl und R³ für Ethyl. Eine entsprechende Verbindung der Formel (II) wird dann als Methylethylketoxim (MEKO) oder Butanonoxim bezeichnet.

Die bevorzugten Pyrazole der allgemeinen Formel (V) 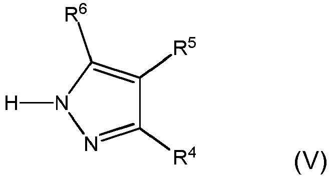 worin
die Reste R⁴, R⁵ und R⁶ unabhängig voneinander für Wasserstoff oder eine Alkylgruppe mit 1 bis 6, vorzugsweise 1 bis 4, besonders bevorzugt 1 bis 3 Kohlenstoffatomen stehen, können im Rahmen der vorliegenden Erfindung ebenfalls als Blockierungsmittel eingesetzt werden. Ganz besonders bevorzugt stehen die Reste R⁴, R⁵ und R⁶ für Methyl und/oder Ethyl, insbesondere für Methyl.

Besonders bevorzugt handelt es sich bei den Verbindungen der Formel (V) um an 3-Position des Rings alkylsubstituierte, vorzugsweise methylsubstituierte Verbindungen mit besonders bevorzugt R⁵ = R⁶ = H und ganz besonders bevorzugt handelt es sich bei den Verbindungen der Formel (V) um an 3- und 5-Position des Rings alkylsubsituierte, vorzugsweise methylsubsituierte Verbindungen, mit besonders bevorzugt R⁵ = H. Ganz besonders bevorzugt handelt es sich bei der Verbindung der allgemeinen Formel (V) somit um 3,5-Dimethylpyrazol.

### Hydrophilisierungsmittel

Zur Herstellung der *hydrophilen blockierten Polyisocyanate* werden, neben den Blockierungsmitteln, die wenigstens zwei der n (≥3) Isocyanatgruppen der Spezies der Formel (I) blockieren, auch Hydrophilisierungsmittel der allgemeinen Formel (III)

HX-R^{hydrophil} (III)

eingesetzt, worin
X für O, S, NH oder NR' wobei R' für einen Alkylrest mit 1 bis 8, vorzugsweise 1 bis 6 Kohlenstoffatomen oder einen Cycloalkylrest mit 3 bis 8, vorzugsweise 3 bis 6 Kohlenstoffatomem steht; und
R^{hydrophil} für einen alkoxyterminierten Polyalkylenoxid-Rest und/oder einen Sulfonsäuregruppen, Sulfonatgruppen, Carboxylgruppen und/oder Carboxylatgruppen enthaltendenen organischen, vorzugsweise aliphatischen Rest steht.

Die Spezies der Formel (III) werden mit wenigstens einer, vorzugsweise nur einer der n (≥3) Isocyanatgruppen zur Reaktion gebracht, um auf diese Weise mindestens eine, vorzugsweise eine hydrophile Gruppe R^{hydrophil} in das blockierte Polyisocyanat einzuführen.

Als Spezies der Formel R^{hydrophil}-XH sind vorzugsweise solche, in welchen X für O, NH oder NR' steht und R^{hydrohil} für einen Rest R⁷-(OEt)_{y}(OPr)_{z} steht, worin R⁷ für einen Alkylrest mit 1 bis 6, vorzugsweise 1 bis 4 und besonders bevorzugt 1 bis 2 Kohlenstoffatomen steht, y für 4 bis 20, vorzugsweise 4 bis 16 und besonders bevorzugt 4 bis 12 steht, z für 0 bis 10, vorzugsweise 0 bis 6 und besonders bevorzugt 0 bis 4 wie beispielsweise 1 bis 4 steht, vorzugsweise y+z ≤ 20 ist und vorzugsweise y ≥ z, besonders bevorzugt y ≥ 2z, ganz besonders bevorzugt y ≥ 3z ist. Besonders bevorzugt ist z = 0 und y = 4 bis 20.

### Ketoxim-blockierte Polvisocvanate (Spezies der Formel (IV))

Das folgende Schema zeigt exemplarisch die Herstellung erfindungsgemäßer *hydrophober ketoxim-blockierter Polyisocyanate (n* ≥ *2; q = 0; p = n;* R¹ *enthält keine hydrophilen Gruppen)* und *hydrophiler ketoxim-blockierter Polyisocyanate (n* ≥ 3; *q≥ 1; p = n* - *q;* und/oder *n* ≥ 2; *q* ≥ 0; *R¹ enthält mindestens eine hydrophile Gruppe):* 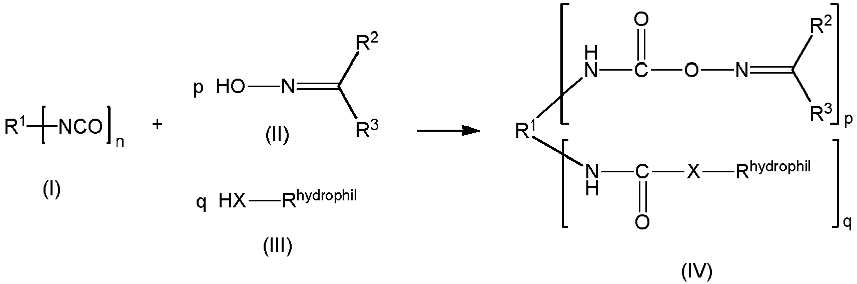 worin
R¹ für einen organischen NCO-gruppenfreien organischen Rest steht, enthaltend mindestens einen aromatischen Kohlenwasserstoffrest oder mindestens einen cycloaliphatischen Kohlenwasserstoffrest und gegebenenfalls eine oder mehrere Gruppen gewählt aus der Gruppe der Isocyanuratgruppen, Iminooxadiazindiongruppen, Uretdiongruppen, Allophanatgruppen, Biuretgruppen, Urethangruppen, Harnstoffgruppen, Ethergruppen und Estergruppen;
R² und R³ unabhängig voneinander für Alkylreste mit 1 bis 6, vorzugsweise 1 bis 4, besonders bevorzugt 1 bis 3 Kohlenstoffatomen stehen; oder gemeinsam einen Alkylenrest mit 3 bis 5 Kohlenstoffatomen bilden;
R^{hydrophil} für einen alkoxyterminierten Polyalkylenoxid-Rest und/oder einen Sulfonsäuregruppen, Sulfonatgruppen, Carboxylgruppen und/oder Carboxylatgruppen enthaltendenen organischen, vorzugsweise aliphatischen Rest steht; und
n ≥ 2 bis vorzugsweise 10 ist und für p + q steht, wobei p für 2 bis 10 steht und q für 0 bis 8 steht.

Besonders bevorzugt enthält der Rest R¹ mindestens einen aromatischen Kohlenwasserstoffrest.

Besonders bevorzugt steht q für 0, das heißt es handelt sich um hydrophobe ketoxim-blockierte Polyisocyanate.

### Pyrazol-blockierte Polyisocyanate (Spezies der Formel (VI))

Das folgende Schema zeigt exemplarisch die Herstellung erfindungsgemäßer *hydrophober pyrazol-blockierter Polyisocyanate (n* ≥ *2; q = 0; p = n;* R¹ *enthält keine hydrophilen Gruppen)* und *hydrophiler pyrazol-blockierter Polyisocyanate (n* ≥ 3; *q≥ 1; p = n* - *q;* und/oder *n* ≥ 2; *q* ≥ 0; *R¹ enthält mindestens eine hydrophile Gruppe):* 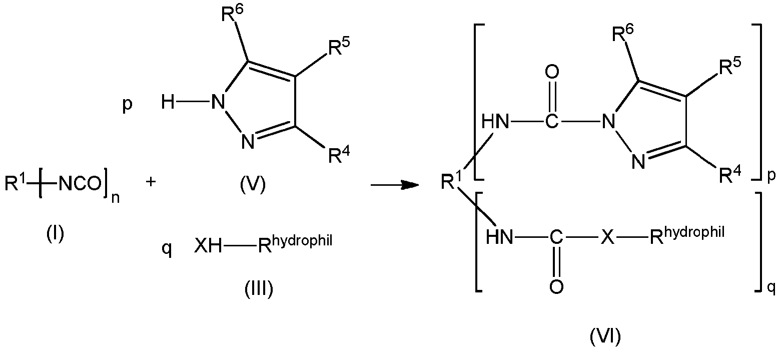 worin
R¹ für einen organischen NCO-gruppenfreien organischen Rest steht, enthaltend mindestens einen aromatischen Kohlenwasserstoffrest oder mindestens einen cycloaliphatischen Kohlenwasserstoffrest und gegebenenfalls eine oder mehrer Gruppen gewählt aus der Gruppe der Isocyanuratgruppen, Iminooxadiazindiongruppen, Uretdiongruppen, Allophanatgruppen, Biuretgruppen, Urethangruppen, Harnstoffgruppen, Ethergruppen und Estergruppen;
R⁴, R⁵ und R⁶ unabhängig voneinander für Wasserstoff oder Alkylreste mit 1 bis 6, vorzugsweise 1 bis 4, besonders bevorzugt 1 bis 3 Kohlenstoffatomen, ganz besonders bevorzugt für Methyl und/oder Ethyl, insbesondere Methyl stehen;
R^{hydrophil} für einen alkoxyterminierten Polyalkylenoxid-Rest und/oder einen Sulfonsäuregruppen, Sulfonatgruppen, Carboxylgruppen und/oder Carboxylatgruppen enthaltendenen organischen, vorzugsweise aliphatischen Rest steht; und
n ≥ 2 bis vorzugsweise 10 ist und für p + q steht, wobei p für 2 bis 10 steht und q für 0 bis 8 steht.

### Polvanionisches Polymer (C)

Die erfindungsgemäße wässrige Beschichtungsmittelzusammensetzung enthält mindestens ein polyanionisches Polymer (C), hierin auch als Polyelektrolyt bezeichnet. Hierunter werden im Rahmen dieser Erfindung auch alle potenziell polyanionischen Polymere verstanden, das heißt auch solche, die versalzbare Säuregruppen wie beispielsweise eine HOOC-Gruppe, eine HOSO₂-Gruppe oder eine HOSO₃-Gruppe tragen.

Das oder die polyanionischen Polymere (C) (hierin auch als anionische Polyelektrolyte (C) bezeichnet) sind von den polymeren Polyolen (A) verschieden.

Die polyanionischen Polymere (C) bilden im wässrigen Medium vorzugsweise sogenannte kolloidale Lösungen, in welchen aufgrund dynamischer Prozesse keine dimensionsstabilen Partikel vorliegen. Sie sind daher auch aus diesem Grunde nicht mit den organischen Polymerpartikeln, umfassend oder bestehend aus isocyanatreaktiven Polymeren (A) zu verwechseln und zählen auch nicht zu den Bestandteilen dieser organischen Polymerpartikel (A).

Sie werden gewählt aus der Gruppe (C.i) natürlicher, (C.ii) semisynthetischer oder (C.iii) synthetischer polyanionischen Polymere. Die polyanionischen Polymere (C) können insbesondere teilweise verestert und/oder teilweise amidiert und/oder teilweise epoxidiert vorliegen.

Zur Gruppe der (C.i) natürlichen polyanionischen Polymere zählen beispielsweise natürlich vorkommende anionische Polysaccharide wie beispielsweise Glucuronsäure und/oder Galacturonsäure enthaltende anionische Polysaccharide, insbesondere solche gewählt aus der Gruppe der Pektine, Gummi Arabicum, Tragant, Karaya, Gummi ghatti, Xanthan und Gellan; Guluronsäure und/oder Mannuronsäure enthaltende anionische Polysaccharide, wie insbesondere Alginate; natürlich vorkommende sulfatierte und gegebenenfalls zusätzlich carboxylierte Polysaccharide wie beispielsweise Agar, Carageenan, Chondroitinsulfat, und Heparin. Bevorzugt sind carboxylgruppenhaltige polyanionische Polysaccharide, insbesondere solche die ausschließlich Carboxylgruppen oder Carboxylatgruppen tragen. Besonders bevorzugt sind hierunter Pektine, Aginate und Gellane.

Des Weiteren zählen zur Gruppe der (C.i) natürlichen polyanionischen Polymere natürlich vorkommende Polymere aus oder enthaltend saure Aminosäuren, wie insbesondere Polyaminosäuren und Polypeptide. Zu den sauren Aminosäuren zählen insbesondere solche, die neben der obligatorischen Aminogruppe und Carboxylgruppe mindestens eine weitere Carboxylgruppe tragen. Die Verknüpfung der Aminosäuren untereinander erfolgt über sogenannte Peptidbindungen, dabei ist es unerheblich, ob es sich um alpha-, omega- oder Isopeptidbindungen handelt.

Zur Gruppe der (C.ii) semi-synthetischen polyanionischen Polymere zählen beispielsweise nachträglich sulfatierte, phosphatierte und/oder carboxylierte natürliche polyanionische Polymere (C.i.) wie beispielsweise carboxymethylierte Polysaccharide. Zum einen können die bereits unter (C.i) genannten anionischen Polysaccharide mit weiteren anionischen Gruppen versehen werden zum anderen können neutrale Polysaccharide wie beispielsweise Glykogen, Amylose, Cellulose, Stärke, Dextrane, Fruktane, Callose, Curdlan, Chitin, Polysaccharide aus Tarakernmehl, Guarkernmehl und/oder Johannisbrotbaummehl, Glucomannane und Amylopektin oder gar aminogruppentragende Polysaccharide wie Chitosan sulfatiert, phosphatiert und/oder carboxyliert werden.

Des Weiteren zählen zur Gruppe der (C.ii) semisynthetischen polyanionischen Polymere beispielsweise auch Ligninsulfate.

Zur Gruppe der (C.iii) synthetischen polyanionischen Polymere zählen beispielsweise auch die auf vollsynthetischem Wege erhaltenen Polymere aus oder enthaltend saure Aminosäuren wie insbesondere synthetische Polyaminosäuren und synthetische Polypeptide.

Des Weiteren zählen zur Gruppe der (C.iii) synthetischen polyanionischen Polymere beispielsweise auch Polyvinylsulfonsäure, Polyacrylsäure, Polymethacrylsäure und die Copolymere der Acrylsäure und/oder Methacrylsäure mit Acrylsäureestern, Methacrylsäureestern, Acrylamid, Styrol und von diesen verschiedenen acrylischen, methacrylischen oder vinylischen Monomeren.

Besonders bevorzugt enthält die erfindungsgemäße wässrige Beschichtungsmittelzusammensetzung ein Gemisch aus mindestens zwei verschiedenen polyanionischen Polymeren (C), vorzugsweise ein Gemisch aus zwei verschiedenen anionischen Polysacchariden (C.i), insbesondere ein Gemisch aus zwei Pektinen.

Vorzugsweise besitzen die bevorzugt einsetzbaren Pektine einen Veresterungsgrad der Carboxylfunktion im Bereich von 5 % bis 75 % oder einen Substitutionsgrad ("degree of substitution"; DS) von 1 % bis 75 % bezogen auf eine Polysaccharid-Wiederholungseinheit.

Vorzugsweise besitzen die besonders bevorzugten Pektine einen Amidierungsgrad der Carboxylfunktionen im Bereich von 1 bis 50 % und/oder einen Epoxidierungsgrad der Carboxylfunktionen von bis zu 80 % bezogen auf eine Polysaccharid-Wiederholungseinheit.

Die polyanionischen Polymere (C) besitzen vorzugsweise ein zahlenmittleres Molekulargewicht Mₙ (bestimmt mittels Gelpermeation-Chromatographie unter Verwendung von Pullulan-Standards und einer wässrigen 0,05 gew.-%igen Lösung von Natriumazid ) im Bereich von 5000 bis 500000 g/mol, bevorzugt 20000 bis 250000 g/mol und ganz besonders bevorzugt 25000 bis 150000 g/mol.

Das polyanionische Polymer (C) wird vorzugsweise in einer Menge von 0,01 bis 5,0 Gew.-%, besonders bevorzugt in einer Menge von 0,05 bis 2,5 Gew.-%, ganz besonders bevorzugt in einer Menge von 0,1 bis 1,0 Gew.-% bezogen auf das Gesamtgewicht der wässrigen Beschichtungsmittelzusammensetzung, eingesetzt.

Die polyanionischen Polymere (C) werden vorzugsweise in Form ihrer Ammonium- und/oder Phosphoniumsalze eingesetzt. Hierunter besonders bevorzugt sind deren Salze mit Ammoniak und tertiären Aminen wie beispielsweise Trialkylaminen wie insbesondere Trimethylamin, Triethylamin und Tributylamin, oder deren Salze mit tertiären Phosphanen wie beispielsweiseTrialkylphosphanen wie Tri-t-butylphosphan und Tri-n-butylphosphan oder Triphenylphosphan. Ebenfalls können quaternäre Ammonium- und Phosphoniumsalze eingesetzt werden. Ein bevorzugtes quaternäres Ammoniumkation ist beispielsweise Tetra-n-butylammonium und ein bevorzugtes quaternäres Phosphoniumkation ist beispielsweise Tetra-n-butylphosphonium. Ebenfalls einsetzbar sind Salze mit DABCO (1,4-Diazabicylco[2.2.2]octan).

### Komplexe Fluoride (D)

Die erfindungsgemäße wässrige Beschichtungsmittelzusammensetzung enthält ein oder mehrere komplexe Fluoride ausgewählt aus der Gruppe bestehend aus Hexa- oder Tetrafluoriden der metallischen Elemente der Gruppen IVb, Vb und VIb des PSE, insbesondere des Titans, Zirkoniums und Hafniums, vorzugsweise in einer Gesamtmenge von 1,1 ·10⁻⁶ mol/l bis 0,30 mol/l bezogen auf das Metallatom.

Vorzugsweise wird das oder werden die komplexen Fluoride in einer Gesamtmenge von 1,1 10⁻⁵ mol/l bis 0,15 mol/l vorzugsweise 1,1 · 10⁻⁴ mol/l bis 0,05 mol/l bezogen auf das Metallatom eingesetzt.

Der erfindungsgemäße Zusatz von komplexen Fluoriden führt zu weitgehend homogenen Beschichtungen mit Trockenschichtdicken im Bereich von typischerweise 20 µm bis 100 µm auf kaltgewalztem Stahl, heißgewalztem Stahl, Gussstahl und zu Trockenschichtdicken von typischerweise > 1 µm auf verzinktem Stahlblech oder Aluminium.

Ganz besonders bevorzugt ist der Einsatz von Hexafluorozirkonsäure und Hexafluorotitansäure und den Derivaten derselben.

### Aminosilane (E)

Die erfindungsgemäßen wässrigen Beschichtungsmittelzusammensetzungen enthalten vorzugsweise mindestens ein Aminosilan der folgenden allgemeinen Formel (VII):

H₂N-L-Si(OR⁷)₃₋ᵢ(R⁸), (VII)

worin L für eine organische Verbindungsgruppe ("Linker") steht;
Rfür einen Alkylrest mit 1 bis 4 Kohlenstoffatomen, vorzugsweise 1 bis 3 Kohlenstoffatomen, besonders bevorzugt 1 oder 2 Kohlenstoffatomen insbesondere 2 Kohlenstoffatomen oder für eine Gruppe O=C-CH₃ steht;
R⁸ für einen Alkylrest mit 1 bis 4 Kohlenstoffatomen, vorzugsweise 1 bis 3 Kohlenstoffatomen, besonders bevorzugt 1 oder 2 Kohlenstoffatomen steht; und i für 0 oder 1, vorzugsweise für 0 steht.

Vorzugsweise steht die organische Verbindungsgruppe L für einen zweiwertigen Kohlenwasserstoffrest, besonders bevorzugt für einen Rest (CH₂)ₖ mit k = 1, 2 oder 3, vorzugsweise k = 1 oder 3.

Vorzugsweise sind die Aminosilane in einer Gesamtmenge von 0,0005 bis 1,0 Gew.-%, besonders bevorzugt 0,001 bis 0,8 Gew.-% und ganz besonders bevorzugt 0,0015 bis 0,5 Gew.-% in der erfindungsgemäßen wässrigen Beschichtungsmittelzusammensetzung enthalten. Liegt die Gesamtmenge der Aminosilane der allgemeinen Formel (VII) bezogen auf das Gesamtgewicht der erfindungsgemäßen wässrigen Beschichtungsmittelzusammensetzung unter 0,0005 Gew.-%, so nimmt die Korrosionsbeständigkeit der Beschichtung ab, überschreitet die Gesamtmenge der Aminosilane der allgemeinen Formel (VII) 1,0 Gew.-%, bezogen auf das Gesamtgewicht der erfindungsgemäßen wässrigen Beschichtungsmittelzusammensetzung, so findet keine hinreichende Abscheidung der Beschichtungsmittelzusammensetzung statt. Besonders bevorzugt beträgt die Obergrenze der Gesamtmenge der Aminosilane höchstens 0,2 Gew.-% oder gar nur 0,1 oder 0,05 Gew.-% bezogen auf das Gesamtgewicht der erfindungsgemäßen wässrigen Beschichtungsmittelzusammensetzung. Selbst deutlich unterhalb dieser Mengen werden noch hervorragende Ergebnisse erhalten.

### Additive (F)

Besonders bevorzugt enthält die erfindungsgemäße wässrige Beschichtungsmittelzusammensetzung mindestens ein Additiv (F). Unter die Additive (F) fallen nur solche Spezies, die nicht unter eine der Definitionen der Komponenten (A) bis (E) oder (G) fallen.

Vorzugsweise werden die Additive ausgewählt aus der Gruppe umfassend, lösliche Farbstoffe, Pigmente, insbesondere Rußpigmente und/oder Füllstoffe, Konservierungsmitteln, insbesondere Bioziden, umfassend Bakterizide, Fungizide, Algizide, Herbizide und Insektizide; Emulgatoren, Netz- und/oder Dispergiermitteln, Verlaufmitteln, Weichmachern, Säuren zum Einstellen des pH-Werts, Verdickern, und Vernetzungsmitteln.

### Lösliche Farbstoff, Pigmente und/oder Füllstoffe

Die erfindungsgemäßen wässrigen Beschichtungsmittelzusammensetzungen können verschiedenste Farbmittel enthalten wie beispielsweise lösliche Farbstoffe und/oder weitestgehend unlösliche farbgebende und/oder effektgebende Pigmente. Auch können Füllstoffe enthalten sein, die sich von den Pigmenten in der Regel durch einen Brechungsindex von kleiner 1,7 unterscheiden. Im Rahmen dieser Erfindung besonders geeignete Pigmente sind Rußpigmente.

### Konservierungsmittel

Die erfindungsgemäßen wässrigen Beschichtungsmittelzusammensetzungen enthalten vorzugsweise Konservierungsmittel bzw. Biozide. Hierunter werden sämtliche das Wachstum von Mikroorganismen (Pilze, Bakterien, Algen) hemmende oder diese abtötende Substanzen sowie Insektizide und Herbizide mit wachstumshemmender oder abtötender Funktion zusammengefasst, soweit sie nicht unter andere Komponenten der vorliegenden Erfindung fallen.

### Emulgatoren

Vorzugsweise enthält die erfindungsgemäße wässrige Beschichtungsmittelzusammensetzung mindestens einen Emulgator besonders bevorzugt gewählt aus der Gruppe der anionischen oder nichtionischen Emulgatoren, wie sie oben als externe Emulgatoren bei der Beschreibung der stabilisierten organischen Polymerpartikel beschrieben wurden.

Insbesondere bei der Verwendung (meth)acrylat-terminierter Polyurethane als isocyanatreaktives Polymer (A) hat sich die Zugabe fettsäuremodifizierter Polyester, vorzugsweise solchen, mit (terminalen) tertiären Aminogruppen, als Emulgatoren bewährt (beispielsweise erhältlich als EFKA 6225). Hierdurch kann die Stabilisierung im pH-Wert-Bereich bis etwa pH 3 deutlich erhöht werden.

### Netz- und Dispergiermittel

Netz- und/oder Dispergiermittel wie sie in der vorliegenden Erfindung in den erfindungsgemäßen Beschichtungsmittelzusammensetzungen eingesetzt werden können, dienen der Benetzung und Dispergierung von Pigmenten und/oder Füllstoffen. Prinzipiell lassen sich sämtliche Netz- und/oder Dispergiermittel im Rahmen der vorliegenden Erfindung einsetzen.

### Verlaufmittel

Verlaufmittel helfen unerwünschte Oberflächenstrukturen nach erfolgter Beschichtung zu vermeiden. Insoweit es sich bei den Verlaufmitteln um Lösemittel handelt sind diese den Lösemitteln (G) zuzurechnen.

### Säuren zur pH-Werteinstellung

Prinzipiell kann der pH-Wert der erfindungsgemäßen Zusammensetzungen durch den Einsatz von Säuren wie der Hexafluorotitansäure oder der Hexafluoroirkonsäure also komplexen Fluoriden (D) eingestellt werden. Prinzipiell können jedoch auch andere organische oder anorganische Säuren wie Salpetersäure oder Phosphorsäure zur Einstellung des sauren pH-Werts eingesetzt werden.

### Vernetzungsmittel

In der Regel enthalten die erfindungsgemäßen wässrigen Beschichtungsmittelzusammensetzungen neben den ketoxim-blockierten und/oder pyrazol-blockierten Polyisocyanaten (B) keine weiteren externen Vernetzungsmittel. Sind jedoch weitere Vernetzungsmittel vorhanden, so können dies von den ketoxim-blockierten und/oder pyrazol-blockierten Polyisocyanaten (B) verschiedene blockierte Polyisocyanate und/oder Aminoplastharze wie beispielsweise Melaminharze sein.

Der Zusatz von Aminoplastharzen insbesondere Melaminharzen wirkt sich insbesondere in Bezug auf die Überlackierbarkeit der nach dem erfindungsgemäßen Verfahren erhaltenen Beschichtungen mit beispielsweise Basislacken und/oder Klarlacken positiv aus.

### Lösemittel (G)

Da es sich bei den erfindungsgemäßen Beschichtungsmittelzusammensetzungen um wässrige Zusammensetzungen handelt ist das Hauptlösemittel Wasser. Der Wassergehalt der erfindungsgemäßen wässrigen Beschichtungsmittelzusammensetzungen liegt vorzugsweise im Bereich von 65 bis 95 Gew.-%, besonders bevorzugt im Bereich von 70 bis 90 Gew.-% und ganz besonders bevorzugt im Bereich von 75 bis 85 Gew.-%, jeweils bezogen auf das Gesamtgewicht der erfindungsgemäßen wässrigen Beschichtungsmittelzusammensetzung.

Die wässrige Beschichtungsmittelzusammensetzung besitzt einen pH-Wert im Bereich von 3,0 bis 5,0, bevorzugt 3,5 bis 4,5 und besonders bevorzugt im Bereich von 3,8 bis 4,2, insbesondere 3,9 bis 4,1. Der pH-Wert lässt sich vorzugsweise mit anorganischen Säuren wie Phosphorsäure oder Salpetersäure oder der Säureform der komplexen Fluoride (D), zum Beispiel Hexafluorozirkonsäure, einstellen.

Neben Wasser können die erfindungsgemäßen wässrigen Beschichtungsmittelzusammensetzungen organische Lösemittel als Co-Lösemittel enthalten. Der Gehalt an Co-Lösemitteln in den erfindungsgemäßen wässrigen Beschichtungsmittelzusammensetzungen liegt vorzugsweise im Bereich von 0 bis 15 Gew.-%, besonders bevorzugt im Bereich von 0 bis 10 Gew.-% und ganz besonders bevorzugt im Bereich von 0 bis 5 Gew.-%, wie beispielsweise 0 bis 4 Gew.-%, 0 bis 3 Gew.-% oder 0 bis 2 Gew.-%, jeweils bezogen auf das Gesamtgewicht der erfindungsgemäßen wässrigen Beschichtungsmittelzusammensetzung.

Als Co-Lösemittel sind insbesondere die nachfolgend aufgeführten Filmbildehilfsmittel sowie Dialkylether wie beispielsweise Methoxypropanol geeignet.

Einige spezifische Lösemittel wirken auch als Filmbildehilfsmittel indem sie die Oberfläche der organischen Polymerteilchen erweichen und so deren Verschmelzung ermöglichen. Diese Art von Filmbildehilfsmitteln zählt im Rahmen der vorliegenden Erfindung ebenfalls zu den Lösemitteln (H).

Insbesondere vorteilhaft als Filmbildehilfsmittel sind sogenannte langkettige Alkohole, insbesondere solche mit 4 bis 20 Kohlenstoffatomen wie beispielsweise Butandiol, Butylglykol, Butyldiglykol, Ethylenglykolether wie insbesondere Ethylenglykolmonobutylether, Ethylenglykolmonoethylether, Ethylenglykolmonomethylether, Ethylglykolpropylether, Ethylenglykolhexylether, Diethylenglykolmethylether, Diethylenglykolethylether, Diethylenglykolbutylether, Diethylenglykolhexylether oder Polypropylenglykolether wie insbesondere Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, Propylenglykolmonopropylether, Dipropylenglykolmonopropylether, Tripropylenglykolmonopropylether, Propylenglykolphenylether, Trimethylpentandioldiisobutyrat, Polytetrahydrofurane, Polyetherpolyole und/oder Polyesterpolyole. Ein ebenfalls in wässrigen Primärdispersionen gebräuchliches Filmbildehilfsmittel ist 2,2,4-Trimethyl-1 ,3-pentandiol-1-isobutyrat (Texanol®).

### Herstellung der erfindungsgemäßen wässrigen Beschichtungsmittel-zusammensetzungen

Hydrophobe, blockierte Polyisocyanate (B) lassen sich beispielsweise direkt beim Herstellprozess der anionisch und/oder nichtionisch stabilisierten Dispersion organischer Polymerpartikel, welche das isocyanatreaktive Polymer (A) umfasst, zusetzen. Das isocyanatreaktive Polymer (A) fungiert dabei wie ein Schutzkolloid oder externer Emulgator für das hydrophobe, blockierte Polyisocyanat (B). Nach Vermischen können beide Komponenten gemeinsam dispergiert werden. Hydrophile, blockierte Polyisocyanate (B) lassen sich in einfacher Weise mit der anionisch und/oder nichtionisch stabilisierten Dispersion organischer Polymerpartikel, welche das isocyanatreaktive Polymer (A) umfasst, abmischen.

Vernetzerdispersionen können jedoch auch aus hydrophoben blockierten Polyisocyanaten unter Zuhilfenahme externer Emulgatoren hergestellt werden.

Die Zugabe der weiteren Bestandteile erfolgt gleichzeitig oder im Anschluss an obige Schritte vorzugsweise durch einfaches Vermischen. Anschließend wird der pH-Wert eingestellt.

Vorzugsweise wird der Anteil an organischen Polymerpartikeln, welche das isocyanatreaktive Polymer (A) umfassen, so bemessen, dass das molare Verhältnis an NCO-Gruppen im blockierten Polyisocyanat (B) zu den isocyanatreaktiven Gruppen im isocyanatreakiven Polymer (A) 0,5 bis 2,0, besonders bevorzugt 0,75 bis 1,8, ganz besonders bevorzugt 1 bis 1,6 wie insbesondere 1,1 bis 1,5 oder 1,2 bis 1,6 beträgt. Es ist somit besonders bevorzugt das blockierte Polyisocyanat (B) bezüglich seiner bei Einbrenntemperatur reaktiven NCO-Gruppen in einem Überschuss zu den isocyanatreaktiven Gruppen im isocyanatreaktiven Polymer (A) einzusetzen.

Vorzugsweise erfolgt die Herstellung einer erfindungsgemäßen wässrigen Beschichtungsmittelzusammensetzung dadurch, dass man
(i) das oder die ketoxim- und/oder pyrazolblockierten Polyisocyanate (B) mit oder ohne Verwendung eines externen Emulgators mit einer Dispersion der organischen Polymerpartikel, die eine mittlere Teilchengröße von 10 bis 1000 nm aufweisen und eines oder mehrere isocyanatreaktive Polymere (A) umfassen oder aus diesen bestehen, vermischt; oder
(ii) eine Dispersion der organischen Polymerpartikel, die eine mittlere Teilchengröße von 10 bis 1000 nm aufweisen und eines oder mehrere isocyanatreaktive Polymere (A) umfassen oder aus diesen bestehen in Gegenwart des oder der ketoxim- und/oder pyrazolblockierten Polyisocyanate (B) herstellt;
   und
(iii) gleichzeitig oder anschließend das oder die polyanionischen Polymere (C), das oder die komplexen Fluoride (D) und das oder die Aminosilane (E) zumischt; und
(iv) den pH-Wert auf einen Wert von 3 bis 5 einstellt.

### Verfahren zur Beschichtung Metallionen freisetzender Oberflächen von Substraten

Das erfindungsgemäße Verfahren zum Beschichten der Metallionen freisetzenden Oberfläche eines Substrats, umfasst die Schritte oder besteht aus den Schritten:
I. Bereitstellen eines Substrats mit einer Metallionen freisetzenden Oberfläche,
II. Kontaktieren der Metallionen freisetzenden Oberfläche mit einer erfindungsgemäßen wässrigen Beschichtungsmittelzusammensetzung unter Bildung einer organischen Beschichtung,
III. gegebenenfalls Spülen der organischen Beschichtung und
IV. gegebenenfalls Trocknen der organischen Beschichtung bei einer Temperatur von 10 bis 120 °C in einem Zeitraum von 1 bis 40 min und Härten der organischen Beschichtung bei einer Peak-Metal-Temperatur von 120 bis 200 °C in einem Zeitraum von 5 bis 50 min; oder
V. gegebenenfalls Trocknen der organischen Beschichtung und Beschichten mit einer weiteren erfindungsgemäßen Beschichtungsmittelzusammensetzung und anschließendem Trocknen der in Schritt V gebildeten Beschichtung oder beider Beschichtungen und gemeinsamem Härten beider Beschichtungen bei einer Peak-Metal-Temperatur von 120 bis 200 °C in einem Zeitraum von 5 bis 50 min.

### Schritt I

### Substrate

Unter den zu beschichtenden *Substraten mit Metallionen freisetzender Oberfläche* werden hierin erfindungsgemäß zunächst *metallische und nichtmetallische Substrate* unterschieden. Bei den aus den Oberflächen freigesetzten Metallionen handelt es sich im Rahmen dieser Erfindung um Metallkationen, vorzugsweise mehrwertige Metallkationen. Die mehrwertigen Metallkationen werden vorzugsweise gewählt aus der Gruppe umfassend oder bestehend aus Fe²⁺, Fe³⁺, Al³⁺, Cu²⁺, Zn²⁺, Ca²⁺, Mg²⁺, Ti⁴⁺, Sn²⁺, Sn⁴⁺, Cr³⁺ und Ni²⁺.

Unter einem *metallischen Substrat* werden hierin Metalle, Legierungen oder mit einem Metall oder einer Legierung beschichtete Substrate bezeichnet, wobei das mit dem Metall oder der Legierung beschichtete Substrat wiederum ein Metall eine Legierung oder ein nichtmetallisches Substrat wie beispielsweise ein Kunststoff, Glas oder Holz ist. Das heißt die Oberfläche eines Substrats ist aus einem Metall oder einer Legierung. *Metallische Substrate* müssen hierbei eine Oberfläche aufweisen, die unter den Verfahrensbedingungen, insbesondere bei dem im Verfahren einzuhaltenden pH-Wert, Metallionen freisetzt.

*Nichtmetallische Substrate* besitzen eine nichtmetallische Oberfläche, das heißt eine Oberfläche, die nicht aus einem Metall oder einer Legierung besteht, wie beispielsweise eine *organische* und/oder *nichtmetallisch anorganische, beispielsweise silikatische Beschichtung,* in welcher Metallionen eingelagert sind oder durch die vom darunter liegenden Substrat freigesetzte Metallionen zur Oberfläche hindurch diffundieren können.

Um ein derartiges Metallionen freisetzendes *nichtmetallisches Substrat* mit einer festhaftenden *silikatischen Beschichtung* zu erhalten, kann beispielsweise eine Beschichtung mit einer wässrigen Zusammensetzung in Form einer Dispersion auf der Grundlage eines mehrwertige Metallkationen einlagernden, kolloidalen silikatischen Sols oder eines silan- oder silikatmodifizierten Polymers erfolgen.

Zu den *nichtmetallischen anorganischen Beschichtungen,* die geeignet sind Metallkationen aus der Oberfläche freizusetzen gehören beispielsweise auch die im Rahmen einer Vorbehandlung von Metallen oder Legierungen abscheidbaren Konversionsschichten.

Grundsätzlich sind alle Arten von metallischen Werkstoffen als Substrat geeignet, insbesondere solche aus Aluminium, Eisen, Kupfer, Titan, Zink, Magnesium, Zinn und/oder Legierungen mit einem Gehalt an Aluminium, Eisen, Kalzium, Kupfer, Magnesium, Nickel, Chrom, Molybdän, Titan, Zink und/oder Zinn, wobei deren Einsatz auch benachbart und/oder nacheinander erfolgen kann. Die Werkstoffoberflächen können wie oben beschrieben gegebenenfalls auch vorbeschichtet werden und/oder sein, beispielsweise mit Zink oder einer Aluminium und/oder Zink enthaltenden Legierung. Besonders geeignet als Substrat ist Stahl wie beispielsweise kaltgewalzter Stahl oder verzinkter Stahl.

Als zu beschichtende Gegenstände können grundsätzlich alle Arten von Gegenständen eingesetzt werden, die Metallionen freisetzende Oberflächen besitzen. Hierzu zählen insbesondere metallisch beschichtete oder mit einer Metallionen freisetzenden Beschichtung beschichtete polymere oder faserverstärkte, polymere Werkstoffe. Besonders bevorzugte Gegenstände sind insbesondere Bänder (Coils), Bleche, Teile wie z.B. Kleinteile, gefügte Komponenten, kompliziert geformte Komponenten, Profile, Stäbe und/oder Drähte.

### Oberflächenvorbehandlung

Substrate können einer Oberflächenvorbehandlung unterzogen werden.

Der Begriff der *Oberflächenvorbehandlung* umfasst im Rahmen der vorliegenden Erfindung *alle Maßnahmen* vor dem Kontaktieren der Metallionen freisetzenden Oberfläche mit einer erfindungsgemäßen wässrigen Beschichtungsmittelzusammensetzung unter Bildung einer organischen Beschichtung (Schritt II).

Hierzu zählen insbesondere
- das Entfernen von Oberflächenverunreinigungen (Reinigung)
- das Aktivieren der Oberfläche für die Beschichtung und
- das Aufbringen korrosionsinhibierender und/oder haftvermittelnder, insbesondere auch Metallionen freisetzender Schichten.

Die Maßnahmen der Oberflächenvorbehandlung richten sich nach dem Material des Untergrundes, den eventuell vorhandenen Verunreinigungen, nach den Vorgaben in Bezug auf die Wahl des Reinigungsmittels sowie nach den Anforderungen mit Blick auf die aufzubringenden Beschichtungen.

Zu den typischen Verunreinigungen bei *Metallen* bzw. deren *Legierungen* zählen insbesondere Metallspäne, Öle, Fette, Zunder, Rost, Oxide, Flugrost, Staub, Salze, Silikone, Läppaste, Lackreste und Altbeschichtungen. Die Reinigung kann mechanisch durch beispielsweise Wischen, Schleifen, Polieren, Bürsten, Strahlen und thermischem Flammstrahlen oder chemisch (gegebenenfalls mechanisch unterstützt) durch Beizen und/oder Reinigen mit organischen Lösemitteln und/oder wässrigen Reinigern, insbesondere alkalischen Reinigern erfolgen. Eine Oberflächenvorbereitung oder Oberflächenvorbehandlung kann durch Aktivieren (zum Beispiel mechanisches Aufrauen durch Strahlung oder chemisches Aktivieren mit Titianphosphat), Dekapieren im Falle Aluminium enthaltender Oberflächen, Konversionsbeschichten beispielsweise durch Chromatierung oder chromatfreie Verfahren und/oder Nachpassivieren erfolgen.

Zu den typischen Verunreinigungen bei *Kunststoffen* zählen insbesondere Fette, Öle, Trennmittel, Staub und Schweiß, insbesondere Handschweiß. Die Reinigung erfolgt mechanisch üblicherweise durch Abreiben, Abblasen und/oder Abspülen und/oder chemisch mittels organischer Lösemittel und/oder wässriger Reiniger. Eine Oberflächenvorbereitung oder Oberflächenvorbehandlung kann mittels des Chromschwefelsäureprozesses, Satinizing, Benzophenon-UV-Behandlung, Beflammen, Plasma-Verfahren und/oder Corona-Entladung erfolgen.

Zu den typischen Verunreinigungen bei *Holz* zählen insbesondere Schleifreste, und Staub. Die Reinigung erfolgt mechanisch üblicherweise durch Schleifen, Polieren und/oder Bürsten. Eine Oberflächenvorbereitung oder Oberflächenvorbehandlung kann mittels Imprägnierung, Versiegelung und/oder Grundierung erfolgen. Zu den typischen Verunreinigungen bei *mineralischer Untergründe* zählen insbesondere Staub, Salze und Fette. Die Reinigung erfolgt mechanisch üblicherweise durch Strahlen und/oder chemisch mittels organischer Lösemittel und/oder wässriger Reiniger. Eine Oberflächenvorbereitung oder Oberflächenvorbehandlung erfolgt üblicherweise mittels Imprägnierung und Versiegelung.

Sofern nach den vorstehenden Reinigungsschritten und Vorbereitungen bzw. Vorbehandlungen noch keine Metallionen freisetzende Oberfläche vorliegt, werden Metallionen freisetzende organische oder anorganische Beschichtungen aufgebracht, zum Beispiel in Form eines oben bereits erwähnten mehrwertige Metallkationen einlagernden, kolloidalen silikatischen Sols oder durch Bedampfung mit einem Metall oder Aufbringung eines sogenannten Korrosionsschutzprimers, welche Metalle oder Metallverbindungen enthält.

Sofern nach den vorstehenden Reinigungsschritten und Vorbereitungen bzw. Vorbehandlungen eine Metallionen freisetzende Oberfläche vorliegt, bedarf es keiner weiteren Beschichtung. Andererseits können beispielsweise Beschichtungsmittel aufgebracht werden, die selbst Metallionen freisetzen oder zumindest durchlässig für Metallionen sind, so dass Metallionen der darunter liegenden Oberfläche durch die Beschichtung bis zu Beschichtungsoberfläche wandern beziehungsweise diffundieren können.

### Schritt II

Die Ausbildung einer organischen Beschichtung in Schritt II. des erfindungsgemäßen Beschichtungsverfahrens läuft in der Regel *stromlos* ab. Der Begriff *stromloses Beschichten* im Sinne dieser Erfindung bedeutet, dass beim Beschichten der Metallionen freisetzenden Oberfläche mit der erfindungsgemäßen wässrigen Beschichtungsmittelzusammensetzung keine äußere Stromquelle verwendet wird (außenstromlose Abscheidung). So kann beispielsweise neben dem apparativen und energetischen Aufwand, vermieden werden, dass durch unterschiedliche örtliche Stromdichten auf dem Substrat unterschiedliche Schichtdicken der Beschichtung entstehen, die zu einem Kantenaufbau führen können. Darüber hinaus werden die weiteren bereits oben zur elektrischen Tauchlackierung geschilderten Nachteile vermieden.

Der Tauchbeschichtungsschritt im erfindungsgemäßen Verfahren kann in einem weiten Temperaturbereich von vorzugsweise 10 bis 50 °C, besonders bevorzugt 20 bis 40 °C wie insbesondere bei Raumtemperatur (23 °C) durchgeführt werden.

Besonders bevorzugt wird die organische Beschichtung in 20 Sekunden bis 20 Minuten, ganz besonders bevorzugt 30 Sekunden bis 3 Minuten wie insbesondere 45 Sekunden bis 2 Minuten im Tauchbad ausgebildet und weist nach dem Trocknen vorzugsweise eine Trockenfilmdicke im Bereich von 5 bis 50 µm, besonders bevorzugt 10 bis 40 µm und ganz besonders bevorzugt 15 bis 30 µm auf. Die Schichtdicke nimmt mit der Tauchdauer zu und kann so über diese gesteuert werden.

### Schritt III

Der fakultative Spülschritt III erfolgt in der Regel mit einem wässrigen Medium, wie beispielsweise Wasser beziehungsweise Leitungswasser oder vorzugsweise mit einem nicht vollentsalzten wässrigen Medium, beispielsweise mit Spülwasser vorangegangener Spülschritte. Die Verwendung von nicht vollentsalztem Wasser wirkt einer Wiederauflösung der Beschichtung beim Spülgang entgegen.

### Schritte IV und V

Das Trocknen in den Schritten IV und/oder V erfolgt vorzugsweise bei Umgebungstemperaturen zwischen 10 und 100 °C, besonders bevorzugt 20 bis 90 °C, ganz besonders bevorzugt 40 bis 80 °C über einen Zeitraum von vorzugsweise 1 bis 30 min, besonders bevorzugt 2 bis 20 min und ganz besonders bevorzugt 5 bis 15 min.

Bei Durchführung des Schritts V kann wie in Schritt II verfahren werden. Schritt V kann ein Spülschritt analog Schritt III folgen.

Die Härtung in den Schritten IV und/oder V erfolgt vorzugsweise bei Temperaturen von 130 bis 200 °C, besonders bevorzugt von 135 bis 190 °C, ganz besonders bevorzugt bei Temperaturen von 145 bis 180 °C und insbesondere 145 bis 170 °C "Peak-Metal"-Temperatur (PMT; Objekttemperatur) über einen Zeitraum von vorzugsweise 5 bis 45 min, besonders bevorzugt 10 bis 30 min und ganz besonders bevorzugt 12 bis 20 min.

Es hat sich gezeigt, dass die erfindungsgemäß beschichteten Oberflächen auf deutlich einfachere und deutlich kostengünstigere Weise hergestellt werden konnten als beispielsweise solche, die durch Elektrotauchlack-, konventionelle autophoretische Tauchlack- oder Pulverlackbeschichtungsverfahren erhalten werden und dennoch einen hervorragenden Korrosionsschutz aufweisen.

Ferner hat es sich gezeigt, dass derartige erfindungsgemäß hergestellte Beschichtungen Elektrotauchlack-, konventionellen autophoretischen Tauchlack- oder Pulverlackbeschichtungen der heutigen industriellen Praxis in ihren Eigenschaften im Wesentlich gleichwertig sind.

Es wurde überraschend festgestellt, dass die erfindungsgemäß abgeschiedenen Folgebeschichtungen eine homogene Schicht mit einer gleichmäßigen Trockenschichtdicke auch auf einem komplex geformten Werkstück ausbildeten, vergleichbar mit der Qualität einer herkömmlich elektrophoretisch oder autophoretisch abgeschiedenen Lackschicht.

Die erfindungsgemäße Beschichtung kann vorzugsweise eingesetzt werden für beschichteten Substrate als Draht, Drahtgeflecht, Band, Blech, Profil, Verkleidung, Teil eines Fahrzeugs oder Flugkörpers, Element für ein Haushaltsgerät, Element im Bauwesen, Gestell, Leitplanken-, Heizkörper- oder Zaunelement, Formteil komplizierter Geometrie oder Kleinteil wie z.B. Schraube, Mutter, Flansch oder Feder. Besonders bevorzugt wird sie im Automobilbau, im Bauwesen, für den Gerätebau, für Haushaltsgeräte oder im Heizungsbau eingesetzt. Die Verwendung des erfindungsgemäßen Verfahrens ist besonders bevorzugt zur Beschichtung von Substraten, die Probleme bei der Beschichtung mit einem Elektrotauchlack bereitet haben.

Die Erfindung wird nachfolgend an Hand von erfindungsgemäßen Ausführungsbeispielen und Vergleichsbeispielen näher erläutert.

### BEISPIELE

Es wurden Tauchlackbäder mit wässrigen Beschichtungsmittelzusammensetzungen gemäß den in den Tabellen 1 bis 4 angegebenen Bestandteile befüllt. Die Angaben in den Tabellen beziehen sich auf Gewichtsteile (Festkörper) in 100 Gewichtsteilen der Beschichtungsmittelzusammensetzung. Alle Bäder besaßen einen pH-Wert von 4,0 ± 0,2 und einen Gesamtfestkörpergehalt von 20,7 ± 0,5 Gew.-% (1 g Probe, 60 min, 125 °C).

Bei Raumtemperatur (23 °C) wurden alkalisch gereinigte Bonderbleche aus kaltgewalztem Stahl für 1 min in die entsprechenden Bäder getaucht, um die Bleche zu beschichten.

Anschließend wurden die Beschichtungen mit Wasser gespült und getrocknet. Die Trockenschichtdicke nach10-minütiger Trocknung bei 80 °C betrug für alle Proben ca. 20 µm.

Nach erfolgter Trocknung wurden die erfindungsgemäß beschichteten Bleche bei einer Objekttemperatur (Peak-Metal-Temperatur; PMT) von 170 bzw. 180 °C für 15 oder 20 min eingebrannt.

Die Proben wurden im Neutralen Salzsprühtest (NSS; gemäß DIN EN ISO 9227:2012-09) getestet. Die Unterwandung wurde jeweils aus mehreren Messungen gemittelt und in Gruppen von "exzellent" (+++) bis "schlecht" (-) eingeordnet (siehe Tabellen).

Die in den Tabellen mit einem Asterix "*" gekennzeichneten Beispiele sind Vergleichsbeispiele.

### Bestandteile der Beispiele und Vergleichsbeispiele*

A1 organische Polymerpartikel aus einem hydroxyfunktionellen und somit isocyanatreaktiven Epoxidharz mit einem Epoxy-Äquivalentgewicht (VLN 305) von 485-550 g/mol und einer mittleren Teilchengröße von ca. 600 nm
B1 DMP-blockiertes cycloaliphatisches Polyisocyanat mit einem NCO-Gehalt von 14,2 Gew.-%
B2 DMP-blockiertes cycloaliphatisches Polyisocyanat mit einem NCO-Gehalt von 20,3 Gew.-%
B3 MEKO-blockiertes cycloaliphatisches Polyisocyanat mit einem NCO-Gehalt von 14,7 Gew.-%
B4 MEKO-blockiertes aromatisches Polyisocyanat auf MDI-Basis mit einem NCO-Gehalt von 19,0 Gew.-%
B5 DMP-blockiertes, eine Polyethylenoxidkette enthaltendes, cycloaliphatisches Polyisocyanat mit einem NCO-Gehalt von 10,5 Gew.-%
B6 MEKO-blockiertes, eine Polyethylenoxidkette enthaltendes, cycloaliphatisches Polyisocyanat mit einem NCO-Gehalt von 9,7 Gew.-%
C1 Pektin (Ammoniumsalz; pH-Wert einer 2,5 gew.-%igen wässrigen Lösung bei 20 °C: 2,5 - 4,5); mit einem zahlenmittleren Molekulargewicht Mₙ von ca. 80000 g/mol
D1 Hexafluorozirkonsäure
E1 Aminopropyltriethoxysilan (AMEO)
F1 Konservierungsmittel

Die Ergebnisse der Tabelle 1 zeigen, dass sich sowohl unter Verwendung hydrophober als auch hydrophiler, cycloaliphatischer als auch aromatischer, pyrazolals auch ketoxim-blockierter Polyisocyanate für einfache Anwendungen brauchbare, homogene Beschichtungen aus wässrigen Beschichtungsmittelzusammensetzungen bilden lassen, die nach Vortrocknung für 10 min bei 80 °C unter Einbrennbedingung (15 min bei 180 °C) zumindest bei kurzer Belastung im neutralen Salzsprühtest (168 h) eine gute bis akzeptable Unterwanderungsresistenz zeigen. Deutliche Unterschiede zwischen hydrophilen und hydrophoben blockierten Polyisocyanaten exisitieren nicht, so dass beide Typen prinzipiell angewendet werden können.

**Tabelle 1**

| **Bestandteile** | | | | | | **Beispiel 1*** | **Beispiel 2*** | **Beispiel 3*** | **Beispiel 4*** | **Beispiel 5*** | **Beispiel 6*** |
|---|---|---|---|---|---|---|---|---|---|---|---|
| organische Polymerpartikel, umfassend isocyanatreaktive Polymere (A) | | | | | A1 | 13,57 | 15,01 | 13,71 | 14,76 | 12,17 | 11,78 |
| blockiertes Polyisocyanat (B) | hydrophob | cycloaliphatisch | DMP | 14,2 % NCO | B1 | 6,43 | | | | | |
| | | | | 20,3 % NCO | B2 | | 4,99 | | | | |
| | | | MEKO | 14,7 % NCO | B3 | | | 6,29 | | | |
| | | aromatisch | MEKO | 19,0 % NCO | B4 | | | | 5,24 | | |
| | hydrophil | cycloaliphatisch | DMP | 10,5 % NCO | B5 | | | | | 7,83 | |
| | | | MEKO | 9,7 % NCO | B6 | | | | | | 8,22 |
| polyanionisches Polymer (C) | | | | | C1 | 0,5 | 0,5 | 0,5 | 0,5 | 0,5 | 0,5 |
| komplexe Fluoride (D) | | | | | D1 | 0,05 | 0,05 | 0,05 | 0,05 | 0,05 | 0,05 |
| Additiv (F) | | | | | F1 | 0,1 | 0,1 | 0,1 | 0,1 | 0,1 | 0,1 |
| Vortrocknung (10 min; 80 °C; auf CRS) Einbrennen (15 min; 180 °C (PMT)) **Unterwanderung** (NSS, 168 h) [mm] | | | Verhältnis NCO^{(B)}/OH^{(A)} = 0,75 | | | + | + | + | + | O | + |

| | | | | | | | | | | | |
|---|---|---|---|---|---|---|---|---|---|---|---|
| Unter obigen Trocken-, Einbrenn- und Testbedingungen wird eine Unterwanderung [in mm] von 5,0 bis 8,5 als "Gut" (+) und eine Unterwanderung [in mm] von 8,6 bis 12,0 als "Akzeptabel" (O) bewertet | | | | | | | | | | | |

Obige Formulierungen enthalten: 0,9-1,4 Gew.-% Methoxypropanol, 1,6-3,4 Gew.-% Methoxypropylacetat und 2,9-4,4 Gew.-% Gesamtlösemittel MEKO: Methylethylketoxim; DMP: 3,5-Dimethylpyrazol; NCO^{(B)}: NCO-Gruppengehalt in (B) in [mol]; OH^{(A)}: OH-Gruppengehalt in (A) in [mol]

Im Vergleich zu Tabelle 1 zeigt Tabelle 2, dass auch bei einem molaren Verhältnis der blockierten NCO-Gruppen des blockierten Polyisocyanats (B) zu den isocyanatreaktiven OH-Gruppen des Polymers (A) von 1,0 gute bis akzeptable Unterwanderungsergebnisse erhalten werden.

**Tabelle 2**

| **Bestandteile** | | | | | | | **Beispiel 7** | **Beispiel 8** | **Beispiel 9** | **Beispiel 10*** |
|---|---|---|---|---|---|---|---|---|---|---|
| organische Polymerpartikel, umfassend isocyanatreaktive Polymere (A) | | | | | | A1 | 12,26 | 13,85 | 12,41 | 13,57 |
| blockiertes Polyisocyanat (B) | hydrophob | cycloaliphatisch | DMP | | 14,2 % NCO | B1 | 7,74 | | | |
| | | | | | 20,3 % NCO | B2 | | 6,15 | | |
| | | | MEKO | | 14,7 % NCO | B3 | | | 7,59 | |
| | | aromatisch | MEKO | | 19,0 % NCO | B4 | | | | 6,43 |
| polyanionisches Polymer (C) | | | | | | C1 | 0,5 | 0,5 | 0,5 | 0,5 |
| komplexe Fluoride (D) | | | | | | D1 | 0,05 | 0,05 | 0,05 | 0,05 |
| Additiv (F) | | | | | | F1 | 0,1 | 0,1 | 0,1 | 0,1 |
| Vortrocknung (10 min; 80 °C) Einbrennen (15 min; 180 °C (PMT)) **Unterwanderung** (NSS, 168 h) [mm] | | | | Verhältnis NCO^{(B)}/OH^{(A)} = 1,0 | | | + | + | O | + |

| | | | | | | | | | | |
|---|---|---|---|---|---|---|---|---|---|---|
| Unter obigen Trocken-, Einbrenn- und Testbedingungen wird eine Unterwanderung [in mm] von 5,0 bis 8,5 als "Gut" (+) und eine Unterwanderung [in mm] von 8,6 bis 12,0 als "Akzeptabel" (O) bewertet | | | | | | | | | | |

In Tabelle 3 werden bei gleichem molaren Verhältnis der blockierten NCO-Gruppen des blockierten Polyisocyanats (B) zu den isocyanatreaktiven OH-Gruppen des Polymers (A) von 1,0, wie es in Tabelle 2 eingestellt wurde, die Einbrennbedingungen dahingehend variiert, dass der Einbrennvorgang bei Unterbrennungsbedingungen erfolgt, das heißt bei Temperaturen von 170 °C, die für die untersuchten Systeme ein vollständiges Vernetzen im gegebenen Einbrennzeitraum (20 min) üblicherweise, das heißt ohne Zusatz des Silans (E) nicht gestatten. Überraschenderweise zeigen die unter Verwendung des Silans (E) erhaltenen erfindungsgemäßen Beschichtungen der Beispiele 12 und 14 dennoch gute bis akzeptable, in jedem Fall bessere Unterwanderungsergebnisse, im Vergleich zu den nicht erfindungsgemäßen Beschichtungen der Beispiele 11* und 13*.

**Tabelle 3 (Unterbrennbedingungen)**

| **Bestandteile** | | | | | | | **Beispiel 11*** | **Beispiel 12** | **Beispiel 13*** | **Beispiel 14** |
|---|---|---|---|---|---|---|---|---|---|---|
| organische Polymerpartikel, umfassend isocyanatreaktive Polymere (A) | | | | | | A1 | 12,26 | 12,26 | 13,57 | 13,57 |
| blockiertes Polyisocyanat (B) | hydrophob | cycloaliphatisch | DMP | | 14,2 % NCO | B1 | 7,74 | 7,74 | | |
| | | aromatisch | MEKO | | 19,0 % NCO | B4 | | | 6,43 | 6,43 |
| polyanionisches Polymer (C) | | | | | | C1 | 0,5 | 0,5 | 0,5 | 0,5 |
| komplexe Fluoride (D) | | | | | | D1 | 0,05 | 0,05 | 0,05 | 0,05 |
| Silan (E) | | | | | | E1 | 0,0 | 0,002 | 0,0 | 0,002 |
| Additiv (F) | | | | | | F1 | 0,1 | 0,1 | 0,1 | 0,1 |
| Einbrennen (20 min; 170 °C (PMT)) **Unterwanderung** (NSS, 240 h) [mm] | | | | Verhältnis NCO^{(B)}/OH^{(A)} = 1,0 | | | - | O | O | + |

| | | | | | | | | | | |
|---|---|---|---|---|---|---|---|---|---|---|
| Unter obigen Trocken-, Einbrenn- und Testbedingungen wird eine Unterwanderung [in mm] von 5,0 bis 8,5 als "Gut" (+), eine Unterwanderung [in mm] von 8,6 bis 12,0 als "Akzeptabel" (O) und eine Unterwanderung [in mm] größer 12,0 als "Schlecht" (-) bewertet | | | | | | | | | | |

Im Vergleich zu den Experimenten der Tabelle 3 wurden in Tabelle 4 die Einbrenntemperatur wieder um 10 °C auf 180 °C bei gleicher Einbrenndauer erhöht. Auf ein Vortrocknen wurde verzichtet. Die Unterwanderungsergebnisse nach 240-stündiger Durchführung des neutralen Salzsprühtests belegen, dass die erfindungsgemäßen Beispiele 15 und 16 sehr gute bis exzellente Ergebnisse im Unterwanderungstest liefern. Die erfindungsgemäßen wässrigen Beschichtungsmittelzusammensetzungen sind somit selbst bei längerer Belastung im neutralen Salzsprühtest den nicht erfindungsgemäßen Zusammensetzungen deutlich überlegen.

**Tabelle 4**

| **Bestandteile** | | | | | | | **Beispiel 15** | **Beispiel 16** |
|---|---|---|---|---|---|---|---|---|
| organische Polymerpartikel, umfassend isocyanatreaktive Polymere (A) | | | | | | A1 | 13,57 | 10,20 |
| blockiertes Polyisocyanat (B) | hydrophob | aromatisch | MEKO | | 19,0 % NCO | B4 | 6,43 | 9,80 |
| polyanionisches Polymer (C) | | | | | | C1 | 0,5 | 0,5 |
| komplexe Fluoride (D) | | | | | | D1 | 0,05 | 0,05 |
| Silan (E) | | | | | | E1 | 0,002 | 0,002 |
| Additiv (F) | | | | | | F1 | 0,1 | 0,1 |
| Einbrennen (20 min; 180 °C (PMT)) **Unterwanderung** (NSS, 240 h) [mm] | | | | Verhältnis NCO^{(B)}/OH^{(A)} = 1,0 | | | ++ | |
| | | | | Verhältnis NCO^{(B)}/OH^{(A)} = 1,5 | | | | +++ |

| | | | | | | | | |
|---|---|---|---|---|---|---|---|---|
| Unter obigen Trocken-, Einbrenn- und Testbedingungen wird eine Unterwanderung [in mm] von kleiner 2,0 als "Exzellent" (+++) und eine Unterwanderung [in mm] von 2,1 bis kleiner 5,0 als "Sehr Gut" (++) bewertet | | | | | | | | |

## Patentansprüche

1. Wässrige Beschichtungsmittelzusammensetzung enthaltend
- mindestens eine Art organischer Polymerpartikel mit einer Z-mittleren Teilchengröße von 10 bis 1000 nm, gemessen mittels dynamischer Lichtstreuung, umfassend isocyanatreaktive Polymere (A),
- eines oder mehrere ketoxim- und/oder pyrazolblockierte Polyisocyanate (B), enthaltend mindestens einen aromatischen Kohlenwasserstoffrest oder mindestens einen cycloaliphatischen Kohlenwasserstoffrest,
- mindestens ein polyanionisches Polymer (C),
- mindestens ein komplexes Fluorid (D) ausgewählt aus der Gruppe bestehend aus Hexa- oder Tetrafluoriden der metallischen Elemente der Gruppen IVb, Vb und VIb des Periodensystems der Elemente, und
- mindestens ein Aminosilan (E) enthaltend eine Silylgruppe der Formel Si(OR⁷)₃₋ᵢ(R⁸)ᵢ, worin R⁷ für einen Alkylrest mit 1 bis 4 Kohlenstoffatomen oder für eine Gruppe O=C-CH₃ steht, R⁸ für einen Alkylrest mit 1 bis 4 Kohlenstoffatomen steht und i für 0 oder 1 steht,
wobei die wässrige Beschichtungsmittelzusammensetzung
- einen pH-Wert von 3 bis 5 aufweist, und
- einen Gesamtfestkörpergehalt (1 g Probe, 60 min, 125 °C) von 5 bis 35 Gew.-% besitzt.

2. Wässrige Beschichtungsmittelzusammensetzung gemäß Anspruch 1, wobei das oder die ketoxim- und/oder pyrazolblockierten Polyisocyanate (B) Toluylendiisocyanat, Isophorondiisocyanat, Diphenylmethandiisocyanat und/oder Dicyclohexylmethandiisocyanat basiert sind.

3. Wässrige Beschichtungsmittelzusammensetzung gemäß Anspruch 1 oder 2 wobei das oder die ketoxim- und/oder pyrazolblockierten Polyisocyanate (B), Polyethylenoxidketten und/oder Poly(ethylenoxid-propylenoxid)ketten und/oder einen organischen Rest enthalten, der eine oder mehrere Sulfonsäuregruppen, Sulfonatgruppen, Carboxylgruppen und/oder Carboxylatgruppen enthält.

4. Wässrige Beschichtungsmittelzusammensetzung gemäß einem oder mehreren der Ansprüche 1 bis 3, wobei das polyanionische Polymer (C) gewählt ist aus der Gruppe bestehend aus (C.i) natürlich vorkommenden anionischen Polysacchariden, natürlich vorkommenden Polymeren aus oder enthaltend saure Aminosäuren, (C.ii) semi-synthetische polyanionische Polysaccharide und Ligninsulfate und (C.iii) vollsynthetische polyanionische Polymere.

5. Wässrige Beschichtungsmittelzusammensetzung gemäß einem oder mehreren der Ansprüche 1 bis 4, wobei das polyanionische Polymer (C) gewählt ist aus der Gruppe bestehend aus Pektinen, Gellanen, Alginaten und Polyacrylsäuren.

6. Wässrige Beschichtungsmittelzusammensetzung gemäß einem oder mehreren der Ansprüche 1 bis 5, wobei das oder die komplexen Fluoride (D) gewählt sind aus der Gruppe bestehend aus Hexa- oder Tetrafluoriden des Titans, Zirkonium oder Hafniums.

7. Wässrige Beschichtungsmittelzusammensetzung gemäß einem oder mehreren der Ansprüche 1 bis 6, wobei das Aminosilan (E) ein Aminosilan der allgemeinen Formel (VII)
H₂N-L-Si(OR⁷)₃₋ᵢ(R⁸), (VII)
ist,
worin L für eine organische Verbindungsgruppe steht;
R⁷ für einen Alkylrest mit 1 bis 4 Kohlenstoffatomen oder für eine Gruppe O=C-CH₃ steht;
R⁸ für einen Alkylrest mit 1 bis 4 Kohlenstoffatomen steht; und
i für 0 oder 1 steht.

8. Wässrige Beschichtungsmittelzusammensetzung gemäß einem oder mehreren der Ansprüche 1 bis 7, wobei
- der Gehalt der organischen Polymerpartikel, umfassend oder bestehend aus isocyanatreaktiven Polymeren (A) 3 bis 25 Gew.-%, bezogen auf das Gesamtgewicht der Beschichtungsmittelzusammensetzung, beträgt; und/oder
- der Gehalt an polyanionischen Polymeren (C) 0,01 bis 5,0 Gew.-%, bezogen auf das Gesamtgewicht der Beschichtungsmittelzusammensetzung, beträgt; und/oder
- die Menge der komplexen Fluoride (D), bezogen auf das Metallion in diesen, 1,110⁻⁶ mol bis 0,30 mol, jeweils pro Liter der Beschichtungsmittelzusammensetzung beträgt; und/oder
- der Gehalt der Aminosilane (E) 0,0005 bis 1,0 Gew.-%, bezogen auf das Gesamtgewicht der Beschichtungsmittelzusammensetzung, beträgt.

9. Wässrige Beschichtungsmittelzusammensetzung gemäß einem oder mehreren der Ansprüche 1 bis 8, wobei das molare Verhältnis der blockierten NCO-Gruppen der ketoxim- und/oder pyrazolblockierten Polyisocyanate (B) zu den isocyanatreaktiven Gruppen der Polymere (A) zwischen 0,5:1 und 2,0:1 liegt.

10. Wässrige Beschichtungsmittelzusammensetzung gemäß einem oder mehreren der Ansprüche 1 bis 9, wobei der Gehalt an organischen Lösemitteln 0 bis 15 Gew.-%, bezogen auf das Gesamtgewicht der wässrigen Beschichtungsmittelzusammensetzung, beträgt.

11. Verfahren zur Herstellung einer wässrigen Beschichtungsmittelzusammensetzung wie sie einem oder mehreren der Ansprüche 1 bis 10 definiert ist, **dadurch gekennzeichnet, dass** man
(i) das oder die ketoxim- und/oder pyrazolblockierten Polyisocyanate (B) mit oder ohne Verwendung eines externen Emulgators mit einer Dispersion der organischen Polymerpartikel, die eine Z-mittlere Teilchengröße von 10 bis 1000 nm, gemessen mittels dynamischer Lichtstreuung, aufweisen und eines oder mehrere isocyanatreaktive Polymere (A) umfassen oder aus diesen bestehen, vermischt; oder
(ii) eine Dispersion der organischen Polymerpartikel, die eine Z-mittlere Teilchengröße von 10 bis 1000 nm, gemessen mittels dynamischer Lichtstreuung, aufweisen und eines oder mehrere isocyanatreaktive Polymere (A) umfassen oder aus diesen bestehen in Gegenwart des oder der ketoxim- und/oder pyrazolblockierten Polyisocyanate (B) herstellt; und
(iii) gleichzeitig oder anschließend das oder die polyanionischen Polymere (C), das oder die komplexen Fluoride (D) und das oder die Aminosilane (E) zumischt; und
(iv) den pH-Wert auf einen Wert von 3 bis 5 einstellt.

12. Verfahren zum Beschichten der Metallionen freisetzenden Oberfläche eines Substrats,
umfassend die Schritte oder besteht aus den Schritten:
I. Bereitstellen eines Substrats mit einer Metallionen freisetzenden Oberfläche,
II. Kontaktieren der Metallionen freisetzenden Oberfläche mit einer wässrigen Beschichtungsmittelzusammensetzung gemäß einem der Ansprüche 1 bis 10 unter Bildung einer organischen Beschichtung,
III. gegebenenfalls Spülen der organischen Beschichtung und
IV. gegebenenfalls Trocknen der organischen Beschichtung bei einer Temperatur von 10 bis 120 °C in einem Zeitraum von 1 bis 40 min; und Härten der organischen Beschichtung bei einer Peak-Metal-Temperatur von 120 bis 200 °C in einem Zeitraum von 5 bis 50 min; oder
V. gegebenenfalls Trocknen der organischen Beschichtung und Beschichten mit einer weiteren erfindungsgemäßen Beschichtungsmittelzusammensetzung und anschließendem Trocknen der in Schritt V gebildeten Beschichtung oder beider Beschichtungen; und gemeinsamem Härten beider Beschichtungen bei einer Peak-Metal-Temperatur von 120 bis 200 °C in einem Zeitraum von 5 bis 50 min.

13. Verfahren zum Beschichten der Metallionen freisetzenden Oberfläche eines Substrats gemäß Anspruch 12, wobei das Substrat gewählt ist aus
a. metallischen Substraten, umfassend Metalle und/oder Legierungen sowie mit Metallen und/oder Legierungen beschichtete Metalle und/oder Legierungen und/oder nichtmetallische Substrate; und
b. nichtmetallischen Substraten, umfassend organische Beschichtungen und/oder nichtmetallisch anorganische Beschichtungen, wobei in die Beschichtungen Metallionen eingelagert sind oder durch die vom darunterliegenden Substrat freigesetzte Metallionen zur Oberfläche diffundieren können.

14. Verfahren zum Beschichten der Metallionen freisetzenden Oberfläche eines Substrats gemäß einem oder mehreren der Ansprüche 12 oder 13, wobei dieses vor Durchführung des Schritts II einer Oberflächenvorbehandlung unterzogen wird umfassend eine oder mehrere der folgenden Maßnahmen:
- Entfernen von Oberflächenverunreinigungen;
- Aktivieren der Oberfläche für die Beschichtung in Schritt II; und/oder
- Aufbringen einer oder mehrerer korrosionsinhibierender und/oder haftvermittlender und/oder Metallionen freisetzender Schichten.

15. Beschichtung erhältlich nach einem oder mehreren der Verfahren gemäß Ansprüchen 12 bis 14.

## Claims

1. An aqueous coating composition comprising
- at least one type of organic polymer particles having a Z-average particle size of 10 to 1000 nm, measured by means of dynamic light scattering, comprising isocyanate-reactive polymers (A),
- one or more ketoxime- and/or pyrazole-blocked polyisocyanates (B), comprising at least one aromatic hydrocarbyl radical or at least one cycloaliphatic hydrocarbyl radical,
- at least one polyanionic polymer (C),
- at least one complex fluoride (D) selected from the group consisting of hexa- or tetrafluorides of the metallic elements of groups IVb, Vb and VIb of the Periodic Table of the Elements, and
- at least one aminosilane (E) comprising a silyl group of the formula Si(OR⁷)₃₋ᵢ(R⁸)ᵢ in which R⁷ is an alkyl radical having 1 to 4 carbon atoms or is an O=C-CH₃ group, R⁸ is an alkyl radical having 1 to 4 carbon atoms and i is 0 or 1,
wherein the aqueous coating composition
- has a pH of 3 to 5, and
- has a total solids content (1 g sample, 60 min, 125°C) of 5% to 35% by weight.

2. The aqueous coating composition according to claim 1, wherein the ketoxime- and/or pyrazole-blocked polyisocyanate(s) (B) is/are based on tolylene diisocyanate, isophorone diisocyanate, diphenylmethane diisocyanate and/or dicyclohexylmethane diisocyanate.

3. The aqueous coating composition according to claim 1 or 2, wherein the ketoxime- and/or pyrazole-blocked polyisocyanate(s) (B) comprise(s) polyethylene oxide chains and/or poly(ethylene oxide-propylene oxide) chains and/or an organic radical comprising one or more sulfo groups, sulfonate groups, carboxyl groups and/or carboxylate groups.

4. The aqueous coating composition according to one or more of claims 1 to 3, wherein the polyanionic polymer (C) is selected from the group consisting of (C.i) naturally occurring anionic polysaccharides, naturally occurring polymers composed of or comprising acidic amino acids, (C.ii) semisynthetic polyanionic polysaccharides and lignosulfates and (C.iii) fully synthetic polyanionic polymers.

5. The aqueous coating composition according to one or more of claims 1 to 4, wherein the polyanionic polymer (C) is selected from the group consisting of pectins, gellans, alginates and polyacrylic acids.

6. The aqueous coating composition according to one or more of claims 1 to 5, wherein the complex fluoride(s) (D) is/are selected from the group consisting of hexa- or tetrafluorides of titanium, zirconium or hafnium.

7. The aqueous coating composition according to one or more of claims 1 to 6, wherein the aminosilane (E) is an aminosilane of the general formula (VII)
H₂N-L-Si(OR⁷)₃₋ᵢ(R⁸)ᵢ (VII)
in which L is an organic connecting group;
R⁷ is an alkyl radical having 1 to 4 carbon atoms or is an
O=C-CH₃ group;
R⁸ is an alkyl radical having 1 to 4 carbon atoms; and
i is 0 or 1.

8. The aqueous coating composition according to one or more of claims 1 to 7, wherein
- the content of the organic polymer particles comprising or consisting of isocyanate-reactive polymers (A) is 3% to 25% by weight, based on the total weight of the coating composition; and/or
- the content of polyanionic polymers (C) is 0.01% to 5.0% by weight, based on the total weight of the coating composition; and/or
- the amount of the complex fluorides (D), based on the metal ion therein, is 1.1·10⁻⁶ mol to 0.30 mol, in each case per liter of the coating composition; and/or
- the content of the aminosilanes (E) is 0.0005% to 1.0% by weight, based on the total weight of the coating composition.

9. The aqueous coating composition according to one or more of claims 1 to 8, wherein the molar ratio of the blocked NCO groups of the ketoxime- and/or pyrazole-blocked polyisocyanates (B) to the isocyanate-reactive groups of the polymers (A) is between 0.5:1 and 2.0:1.

10. The aqueous coating composition according to one or more of claims 1 to 9, wherein the content of organic solvents is 0% to 15% by weight, based on the total weight of the aqueous coating composition.

11. A process for producing an aqueous coating composition as defined in one or more of claims 1 to 10, which comprises
(i) mixing the ketoxime- and/or pyrazole-blocked polyisocyanate(s) (B), with or without use of an external emulsifier, with a dispersion of the organic polymer particles that have a Z-average particle size of 10 to 1000 nm, measured by means of dynamic light scattering, and comprise or consist of one or more isocyanate-reactive polymers (A); or
(ii) preparing a dispersion of the organic polymer particles that have a Z-average particle size of 10 to 1000 nm, measured by means of dynamic light scattering, and comprise or consist of one or more isocyanate-reactive polymers (A) in the presence of the ketoxime- and/or pyrazole-blocked polyisocyanate(s) (B); and
(iii) simultaneously or subsequently mixing in the polyanionic polymer(s) (C), the complex fluoride (s) (D) and the aminosilane (s) (E); and
(iv) adjusting the pH to a value of 3 to 5.

12. A process for coating the metal ion-releasing surface of a substrate,
comprising or consisting of the steps of:
I. providing a substrate having a metal ion-releasing surface,
II. contacting the metal ion-releasing surface with an aqueous coating composition according to any of claims 1 to 10 to form an organic coating,
III. optionally rinsing the organic coating and
IV. optionally drying the organic coating at a temperature of 10 to 120°C within a period of 1 to 40 min; and curing the organic coating at a peak metal temperature of 120 to 200°C within a period of 5 to 50 min; or
V. optionally drying the organic coating and coating with a further coating composition of the invention and then drying the coating formed in step V or both coatings; and curing the two coatings together at a peak metal temperature of 120 to 200°C within a period of 5 to 50 min.

13. The process for coating the metal ion-releasing surface of a substrate according to claim 12, wherein the substrate is selected from
a. metallic substrates, comprising metals and/or alloys, and metals and/or alloys and/or nonmetallic substrates that have been coated with metals and/or alloys; and
b. nonmetallic substrates, comprising organic coatings and/or nonmetallic inorganic coatings, where metal ions have been incorporated into the coatings or metal ions released by the underlying substrate can diffuse through the coatings to the surface.

14. The process for coating the metal ion-releasing surface of a substrate according to one or more of claims 12 and 13, wherein said substrate, prior to performance of step II, is subjected to a surface pretreatment comprising one or more of the following measures:
- removing surface impurities;
- activating the surface for the coating in step II; and/or
- applying one or more corrosion-inhibiting and/or adhesion-promoting and/or metal ion-releasing layers.

15. A coating obtainable by one or more of the processes according to claims 12 to 14.

## Revendications

1. Composition aqueuse d'agent de revêtement, contenant
- au moins un type de particules polymères organiques présentant une grosseur moyenne Z de particule de 10 à 1000 nm, mesurée par dispersion dynamique de la lumière, comprenant des polymères réactifs avec isocyanate (A),
- un ou plusieurs polyisocyanates bloqués par cétoxime et/ou par pyrazole (B), contenant au moins un radical hydrocarboné aromatique ou au moins un radical hydrocarboné cycloaliphatique,
- au moins un polymère polyanionique (C),
- au moins un fluorure complexe (D) choisi dans le groupe constitué par les hexafluorures ou les tétrafluorures des éléments métalliques des groupes IVb, Vb et VIb du système périodique des éléments et
- au moins un aminosilane (E) contenant un groupe silyle de formule Si (OR⁷)₃₋ᵢ(R⁸)ᵢ, dans laquelle R⁷ représente un radical alkyle comprenant 1 à 4 atomes de carbone ou un groupe O=C-CH₃, R⁸ représente un radical alkyle comprenant 1 à 4 atomes de carbone et i représente 0 ou 1,
la composition aqueuse d'agent de revêtement
- présentant un pH de 3 à 5 et
- possédant une teneur totale en corps solides (échantillon de 1 g, 60 min, 125°C) de 5 à 35% en poids.

2. Composition aqueuse d'agent de revêtement selon la revendication 1, le ou les polyisocyanates bloqués par cétoxime et/ou par pyrazole (B) étant le diisocyanate de toluylène, le diisocyanate d'isophorone, le diisocyanate de diphénylméthane et/ou le diisocyanate de dicyclohexylméthane.

3. Composition aqueuse d'agent de revêtement selon la revendication 1 ou 2, le ou les polyisocyanates bloqués par cétoxime et/ou par pyrazole (B) contenant des chaînes poly(oxyde d'éthylène) et/ou des chaînes poly(oxyde d'éthylène-oxyde de propylène) et/ou un radical organique qui contient un ou plusieurs groupes acide sulfonique, groupes sulfonate, groupes carboxyle et/ou groupes carboxylate.

4. Composition aqueuse d'agent de revêtement selon l'une ou plusieurs des revendications 1 à 3, le polymère polyanionique (C) étant choisi dans le groupe constitué par (C.i) les polysaccharides anioniques naturels, les polymères naturels constitués par des acides aminés acides ou contenant ceux-ci, (C.ii) les polysaccharides polyanioniques semi-synthétiques et les sulfates de lignine et (C.iii) les polymères polyanioniques totalement synthétiques.

5. Composition aqueuse d'agent de revêtement selon l'une ou plusieurs des revendications 1 à 4, le polymère polyanionique (C) étant choisi dans le groupe constitué par les pectines, les gellanes, les alginates et les poly(acides acryliques).

6. Composition aqueuse d'agent de revêtement selon l'une ou plusieurs des revendications 1 à 5, le ou les fluorures complexes (D) étant choisis dans le groupe constitué par les hexafluorures ou les tétrafluorures du titane, du zirconium ou de l'hafnium.

7. Composition aqueuse d'agent de revêtement selon l'une ou plusieurs des revendications 1 à 6, l'aminosilane (E) étant un aminosilane de formule générale (VII)
H₂N-L-Si(OR⁷)₃₋ᵢ(R⁸)ᵢ (VII)
dans laquelle L représente un groupe de liaison organique ;
R⁷ représente un radical alkyle comprenant 1 à 4 atomes de carbone ou un groupe O=C-CH₃ ;
R⁸ représente un radical alkyle comprenant 1 à 4 atomes de carbone ; et
i représente 0 ou 1.

8. Composition aqueuse d'agent de revêtement selon l'une ou plusieurs des revendications 1 à 7,
- la teneur en particules polymères organiques, comprenant des polymères réactifs avec isocyanate (A) ou constituées par ceux-ci, étant de 3 à 25% en poids, par rapport au poids total de la composition d'agent de revêtement ; et/ou
- la teneur en polymères polyanioniques (C) étant de 0,01 à 5,0% en poids, par rapport au poids total de la composition d'agent de revêtement ; et/ou
- la quantité de fluorures complexes (D), par rapport à l'ion métallique dans ceux-ci, étant de 1,1.10⁻⁶ mole à 0,30 mole, à chaque fois par litre de composition d'agent de revêtement ; et/ou
- la teneur en aminosilanes (E) étant de 0,0005 à 1,0% en poids, par rapport au poids total de la composition d'agent de revêtement.

9. Composition aqueuse d'agent de revêtement selon l'une ou plusieurs des revendications 1 à 8, le rapport molaire des groupes NCO bloqués des polyisocyanates bloqués par cétoxime et/ou par pyrazole (B) aux groupes réactifs avec isocyanate des polymères (A) étant situé entre 0,5:1 et 2,0:1.

10. Composition aqueuse d'agent de revêtement selon l'une ou plusieurs des revendications 1 à 9, la teneur en solvants organiques étant de 0 à 15% en poids, par rapport au poids total de la composition aqueuse d'agent de revêtement.

11. Procédé pour la préparation d'une composition aqueuse d'agent de revêtement telle que définie selon l'une ou plusieurs des revendications 1 à 10, **caractérisé en ce qu'**on
(i) mélange le ou les polyisocyanates bloqués par cétoxime et/ou par pyrazole (B), avec ou sans utilisation d'un émulsifiant externe, avec une dispersion des particules polymères organiques, qui présentent une grosseur moyenne Z de particule de 10 à 1000 nm, mesurée par dispersion dynamique de la lumière, et qui comprennent un ou plusieurs polymères réactifs avec isocyanate (A) ou qui sont constituées par ceux-ci ; ou
(ii) prépare une dispersion des particules polymères organiques, qui présentent une grosseur moyenne Z de particule de 10 à 1000 nm, mesurée par dispersion dynamique de la lumière, et qui comprennent un ou plusieurs polymères réactifs avec isocyanate (A) ou qui sont constituées par ceux-ci en présence du ou des polyisocyanates bloqués par cétoxime et/ou par pyrazole (B) ; et
(iii) ajoute en mélangeant simultanément ou consécutivement le ou les polymères polyanioniques (C), le ou les fluorures complexes (D) et le ou les aminosilanes (E) ; et
(iv) règle le pH à une valeur de 3 à 5.

12. Procédé pour le revêtement de la surface libérant des ions métalliques d'un substrat, comprenant les étapes ou constitué par les étapes :
I. mise à disposition d'un substrat présentant une surface libérant des ions métalliques,
II. mise en contact de la surface libérant des ions métalliques avec une composition aqueuse d'agent de revêtement selon l'une quelconque des revendications 1 à 10 avec formation d'un revêtement organique,
III. le cas échéant rinçage du revêtement organique et
IV. le cas échéant séchage du revêtement organique à une température de 10 à 120°C pendant une période de 1 à 40 minutes ; et durcissement du revêtement organique à une température de pic du métal de 120 à 200°C pendant une période de 5 à 50 minutes ; ou
V. le cas échéant séchage du revêtement organique et revêtement par une autre composition d'agent de revêtement selon l'invention et séchage consécutif du revêtement formé dans l'étape V ou des deux revêtements ; et durcissement commun des deux revêtements à une température de pic du métal de 120 à 200°C pendant une période de 5 à 50 minutes.

13. Procédé pour le revêtement de la surface libérant des ions métalliques d'un substrat selon la revendication 12, le substrat étant choisi parmi
a. les substrats métalliques, comprenant les métaux et/ou les alliages, ainsi que les métaux et/ou les alliages et/ou les substrats métalliques revêtus par des métaux et/ou des alliages ; et
b. les substrats non métalliques, comprenant les revêtements organiques et/ou les revêtements inorganiques non métalliques, des ions métalliques étant incorporés dans les revêtements ou des ions métalliques libérés par le substrat sous-jacent pouvant diffuser à travers lesdits revêtements vers la surface.

14. Procédé pour le revêtement de la surface libérant des ions métalliques d'un substrat selon l'une ou plusieurs des revendications 12 ou 13, ledit substrat étant soumis avant la réalisation de l'étape II à un prétraitement de surface, comprenant l'une ou plusieurs des mesures suivantes :
- élimination des impuretés de surface ;
- activation de la surface pour le revêtement dans l'étape II ; et/ou
- application d'une ou de plusieurs couches inhibant la corrosion et/ou promouvant l'adhérence et/ou libérant des ions métalliques.

15. Revêtement pouvant être obtenu selon l'un ou plusieurs des procédés selon les revendications 12 à 14.
